# EUROPEAN PATENT APPLICATION

(11) **EP 4 723 687 A1**
(43) Date of publication of application: **08.04.2026**
(21) Application number: 24221424.5
(22) Date of filing: 19.12.2024
(51) Int. Cl.: H04W 4/38, H04W 84/18

(54) **PROCESSING METHOD USING INTEGRATED SENSING AND COMMUNICATION TECHNOLOGY AND USER EQUIPMENT USING THE SAME**

(30) Priority: 04.10.2024 TW 113137984
(71) Applicant: Industrial Technology Research Institute, 310401 Hsinchu (TW)
(72) Inventor: Lee, Ming-Chun, 300 Hsinchu City (TW); Chou, Chi-Han, 712 Tainan City (TW); Kang, Po-Chun, 300 Hsinchu City (TW)
(74) Representative: Kurig, Thomas

(57) **Abstract**

A processing method using integrated sensing and communication technology and user equipment (110, 110a, 110b) using the same is related to the processing method including receiving (S2410) a query information of a collaborative sensing service from a first network entity, transmitting (S2420) a response message of the query information to the first network entity, receiving (S2430) a first collaborative sensing configuration information of the collaborative sensing service from the first network entity, and enabling (S2440) the collaborative sensing service based on the first collaborative sensing configuration information.

## Description

### TECHNICAL FIELD

The disclosure relates to a processing method using integrated sensing and communication technology and user equipment using the processing method.

### BACKGROUND

In future communication systems, with the introduction of large bandwidth, millimeter wave and massive multiple-input multiple-output (MIMO) technologies, wireless sensing technology based on mobile communication systems has become increasingly feasible and has received widespread attention. Furthermore, with the continuous advancement of science and technology, the demand for communication and sensing technologies in the Internet of Things (IoT) and future communication systems has increased significantly. Based on this, integrated sensing and communication (ISAC) technology has emerged to optimize the overall performance of the communication system. ISAC is a technology that integrates sensing and communication into the same communication system. Specifically, ISAC technology may use signal changes in communication signals to sense various types of motion in the surrounding to implement sensing functions such as detection, positioning, identification, and imaging of target objects. With the increasing demand for real-time data transmission and environmental perception in fields such as autonomous driving, smart homes, and industrial automation, ISAC technology has also been implemented in various fields. In the field of smart transportation, ISAC technology may provide high-precision environmental perception and reliable vehicle communication, improving traffic safety and efficiency. In smart homes, ISAC technology may implement the perception of the home environment and communication between equipment, providing a more convenient home experience. In terms of industrial automation, ISAC technology may implement real-time monitoring of equipment status and communication of control systems, improving production efficiency and equipment maintenance levels. Although ISAC technology has significant advantages, there are still many challenges in how to implement ISAC technology in future communication systems.

### SUMMARY

In some embodiments, a processing method using integrated sensing and communication technology is adapted to a user equipment and includes (but is not limited to): receiving a query information of a collaborative sensing service from a first network entity, transmitting a response message of the query information to the first network entity, receiving a first collaborative sensing configuration information of the collaborative sensing service from the first network entity, and enabling the collaborative sensing service based on the first collaborative sensing configuration information.

In some embodiments, a user equipment includes (but is not limited to) a transceiver and a processor. The transceiver is configured to receive and transmit a signal. The processor is coupled to the transceiver. The processor is configured to receive a query information of a collaborative sensing service from a first network entity, transmit a response message of the query information to the first network entity, receive a first collaborative sensing configuration information of the collaborative sensing service from the first network entity, and enable the collaborative sensing service based on the first collaborative sensing configuration information.

In some embodiments, a processing method using integrated sensing and communication technology includes (but is not limited to) transmitting a query information of a collaborative sensing service to a user equipment, receiving a response message of the query information from the user equipment, and transmitting a first collaborative sensing configuration information of the collaborative sensing service to the user equipment.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a schematic diagram of a wireless communication system according to an exemplary embodiment.
FIG. 2 is a schematic diagram of multiple network functions according to an exemplary embodiment.
FIG. 3A to FIG. 3F are schematic diagrams of the status of the sensing equipment switching between different operation modes in different examples.
FIG. 4 is a flow chart of a processing method using integrated sensing and communication technology according to an exemplary embodiment.
FIG. 5 is a flow chart of activating a periodic collaborative sensing service according to an exemplary embodiment.
FIG. 6 is a flow chart of activating a periodic collaborative sensing service according to an exemplary embodiment.
FIG. 7 is a flow chart of activating a periodic collaborative sensing service according to an exemplary embodiment.
FIG. 8 is a flow chart of activating an aperiodic collaborative sensing service according to an exemplary embodiment.
FIG. 9 is a flow chart of activating an emergency broadcast according to an exemplary embodiment
FIG. 10 is a flow chart of activating an emergency broadcast according to an exemplary embodiment.
FIG. 11 is a flow chart of activating an emergency collaborative sensing service according to an exemplary embodiment.
FIG. 12 is a flow chart of switching modes or updating a service configuration according to an exemplary embodiment.
FIG. 13 is a flow chart of a third-party application requesting a sensing information according to an exemplary embodiment.
FIG. 14 is a flow chart of a third-party application requesting a sensing information according to an exemplary embodiment.
FIG. 15 is a flow chart for activating a local collaborative sensing data integration according to an exemplary embodiment.
FIG. 16 is a schematic diagram of an application scenario according to an exemplary embodiment.
FIG. 17 is a schematic diagram of an application scenario according to an exemplary embodiment.
FIG. 18 is a schematic diagram of an application scenario according to an exemplary embodiment.
FIG. 19 is a schematic diagram of an application scenario according to an exemplary embodiment.
FIG. 20 is a schematic diagram of an application scenario according to an exemplary embodiment.
FIG. 21 is a schematic diagram of an application scenario according to an exemplary embodiment.
FIG. 22 is a schematic diagram of an application scenario according to an exemplary embodiment.
FIG. 23 is a schematic diagram of an application scenario according to an exemplary embodiment.
FIG. 24 is a flow chart of a processing method using integrated sensing and communication technology according to an exemplary embodiment.
FIG. 25 is a flow chart of a processing method using integrated sensing and communication technology according to an exemplary embodiment.
FIG. 26 is a block diagram of a wireless communication device according to an embodiment.

### DETAILED DESCRIPTION OF DISCLOSED EMBODIMENTS

In order to facilitate understanding of the foregoing features and advantages of the disclosure, exemplary embodiments with accompanying drawings are described in detail below. It is to be understood that both the foregoing general description and the following detailed description are exemplary and are intended to provide further explanation of the disclosure as claimed.

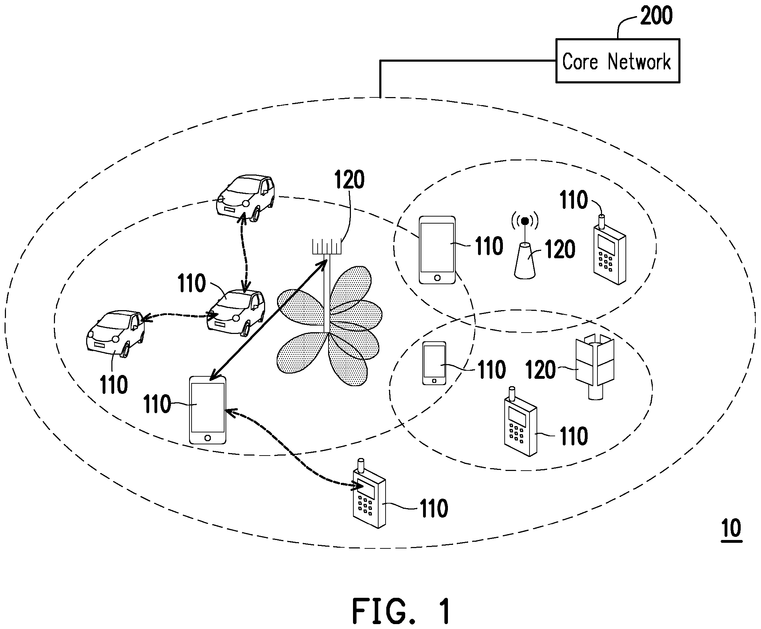

FIG. 1 is a schematic diagram of a wireless communication system according to an exemplary embodiment. Referring to FIG. 1, a wireless communication system 10 includes, but is not limited to, a or more user equipments (UEs) 110, a or more wireless access points 120, and a core network 200.

In the embodiment, the UE 110 may be, for example, a mobile station, an advanced mobile station (AMS), a server, a user terminal, a desktop computer, a notebook computer, a network computer, a workstation, a personal digital assistant (PDA), a tablet personal computer (PC), a scanner, a telephone device, a pager, a camera, a television, a handheld video game device, a music device, a wireless sensor, or an Internet of Things device, etc. In some applications, the UE 110 may be a stationary computer device that is disposed and operated in a mobile environment such as a bus, a train, an airplane, a boat, an automobile, etc.

In the embodiment, the wireless access point 120 (also called as radio access network (RAN) device) may be a device capable of communicating with the UE 110 using radio signals. The wireless access point 120 may be various base stations (BS). The wireless access point 120 may provide communication coverage in a specific geographical region and may communicate with the UE 110 within the coverage region. The coverage region of each wireless access point 120 may cover one cell or multiple cells. Optionally, the wireless access point 120 may be implemented as a home evolved node B (HeNB), an evolved node B (eNB), a next generation node B (gNB), a base transceiver system (BTS), a repeater, a transponder, a public land mobile network (PLMN), or network equipment that are evolving in the future. The wireless access points 120 may interconnect with each other through X2 interfaces or Xn interfaces.

In the embodiment, the core network 200 may be a fifth-generation core (5GC) or a core network of a future generation communication system. Correspondingly, the wireless access point 120 may be connected to the core network 200 through an S1 interface or an NG interface. The core network 200 may provide user authentication, access authorization, tracking, internet protocol (IP) connection, and other access, routing, or mobility functions. The core network 200 may include at least one control plane entity that manages access and mobility (such as access and mobility management function (AMF)) and at least one user plane entity that routes or interconnects packets to external networks (such as user plane function (UPF)). The control plane entity may manage non-access stratum (NAS) functions, such as mobility, authentication and bearer management of the UE 110. For example, AMF is usually configured to manage authentication, registration, paging and other related functions. A user IP packet may be transmitted through a user plane entity. The user plane entity may provide IP address allocation and other functions. The user plane entity may connect to a network operator IP service. For example, UPF is usually configured to transmit user plane packets related to audio calls, video calls, internet businesses, etc. It should be noted that types and functions of equipment in the core network 200 may change based on different generations of communication standards.

In some embodiments, the sensing functions may be implemented through expanding the positioning program of the current communication system. Many positioning programs can perform positioning to targets with communication capabilities to provide simple location information.

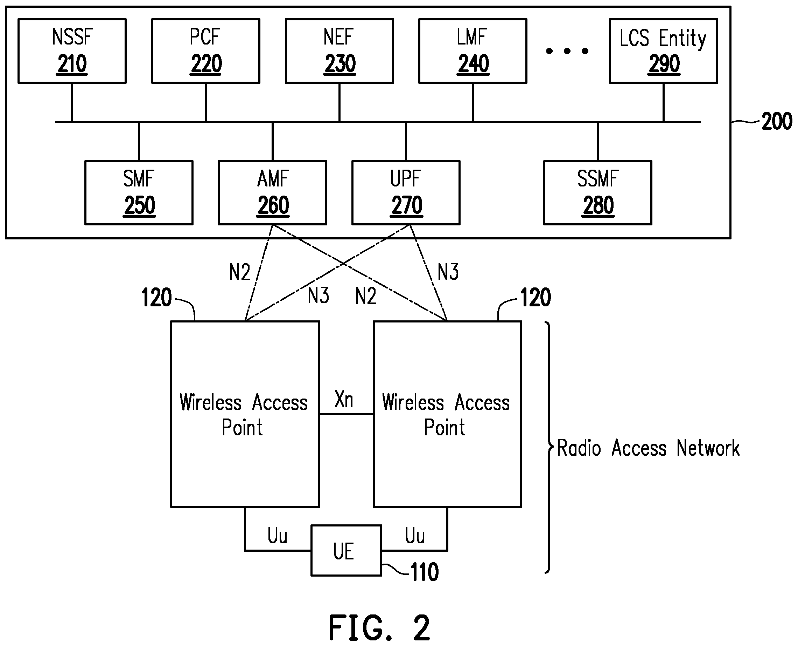

FIG. 2 is a schematic diagram of multiple network functions according to an exemplary embodiment. Referring to FIG. 2, the core network 200 may include a network slice selection function (NSSF) 210, a policy control function (PCF) 220, a network exposure function (NEF) 230, a location management function (LMF) 240, a session management function (SMF) 250, an access and mobility management function (AMF) 260, a user plane function (UPF) 270, a location service (LCS) entity 290, and a sensing management function (SSMF) 280. The UE 110 may be serving by network functions responsible for different business services in the core network 200 through connecting to the wireless access point 120. In addition, each network function in the core network 200 may be implemented as one or more network entities. A network entity may be a communication equipment or a communication function executed by a communication equipment.

It should be noted that in this embodiment, the core network 200 may include the SSMF 280. The SSMF 280 may be a service provider of a collaborative sensing service. The SSMF 280 may integrate a sensing information provided by multiple UEs 110 and generate an integrated sensing report. The SSMF 280 may grant third-party applications authority to access integrated sensing reports. The SSMF 280 may schedule the configuration of the collaborative sensing service. The SSMF 280 may confirm whether an emergency mode of the collaborative sensing service is to be activated and notify at regular intervals whether the emergency mode is released. In addition, the characteristics/functions of other network functions in the core network 200 may refer to relevant specifications specified by 3GPP.

In some embodiments, the AMF 260 may be responsible for messaging between entities related to the collaborative sensing service. Entities related to the collaborative sensing service may include the user equipment 110, the wireless access point 120, third-party applications, and other network functions in the core network 200.

In some embodiments, the wireless communication system 10 may be an ISAC system that provides wireless sensing functions, and may provide a collaborative sensing service. The UE 110 and/or the wireless access point 120 may perform sensing and serve as a sensing equipment. The foregoing "sensing functions" or "perception" may include positioning, but the disclosure is not limited to any specific type of sensing. For example, the sensing functions or the perception may involve sensing any one of a variety of parameters or characteristics. Illustrative examples include location parameters, object sizes, one or multiple mobility parameters (such as speed and/or direction), or temperature, etc., to which the disclosure is not limited. Through the collaborative sensing service, the sensing results of multiple sensing equipment may be integrated to apply integrated results of multiple sensing information to various application scenarios. Through the collaborative sensing service, a sensing equipment may obtain the sensing results of other sensing equipment nearby.

In some embodiments, sensing equipment participating in a collaborative sensing service may include a requester and a collaborator. The requester is a registered user who requests for a collaborative sensing need, and the collaborator is a registered user assigned to collaborate with the requester to perform collaborative sensing. The requester in the sensing equipment may be the UE 110 or the wireless access point 120. The collaborator in the sensing equipment may be the UE 110 or the wireless access point 120.

In some embodiments, taking the application of a collaborative sensing service to a smart transportation system as an example, network functions (such as the SSMF 280 and the AMF 260) participating in the collaborative sensing service may be implemented as central management units of the smart transportation system. The sensing equipment participating in the collaborative sensing service, the SSMF 280, the AMF 260, or the wireless access point 120 may be implemented as a roadside unit (RSU) of the smart transportation system. Sensing equipment participating in the collaborative sensing service may be implemented as vehicles. Third-party applications participating in the collaborative sensing service may be implemented as navigation service applications.

In some embodiments, taking the application of a collaborative sensing service to a smart factory as an example, network functions participating in the collaborative sensing service (such as the SSMF 280 and the AMF 260) may be implemented as central management units of the smart factory. The sensing equipment participating in the collaborative sensing service, the SSMF 280, the AMF 260, or the wireless access point 120 may be implemented as a monitoring unit of the smart factory (such as unmanned aerial vehicles (UAV)). Sensing equipment participating in the collaborative sensing service may be implemented as mobile machinery. Third-party applications participating in the collaborative sensing service may be implemented as anomaly monitoring applications.

In some embodiments, a collaborative sensing service may include a periodic collaborative sensing service, an aperiodic collaborative sensing service, an emergency broadcast service, and an emergency collaborative sensing service. The periodic collaborative sensing service may include a first-level periodic collaborative sensing service and a second-level periodic collaborative sensing service. The detailed processes and details of the foregoing various collaborative sensing services will be described later.

In some embodiments, the UE 110 as a sensing equipment may have multiple operation modes. The foregoing operation mode include, but is not limited to, a normal mode, an intense mode, an idle mode and/or an emergency mode. When operating in different operation modes, the UE 110 may activate different types of collaborative sensing services.

For example, when the UE 110 as a sensing equipment operates in the normal mode, the UE 110 may activate the periodic collaborative sensing service and the emergency broadcast service and prohibit the activation of the aperiodic collaborative sensing service and the emergency collaborative sensing service. When the UE 110 as a sensing equipment operates in the intense mode, the UE 110 may activate the periodic collaborative sensing service, the aperiodic collaborative sensing service and the emergency broadcast service and prohibit the activation of the emergency collaborative sensing service. When the UE 110 as a sensing equipment operates in the idle mode, the UE 110 may activate the emergency broadcast service and prohibit the activation of the periodic collaborative sensing service, the aperiodic collaborative sensing service and the emergency collaborative sensing service. When the UE 110 as a sensing equipment operates in the emergency mode, the UE 110 may activate the periodic collaborative sensing service, the aperiodic collaborative sensing service, the emergency broadcast service, and the emergency collaborative sensing service.

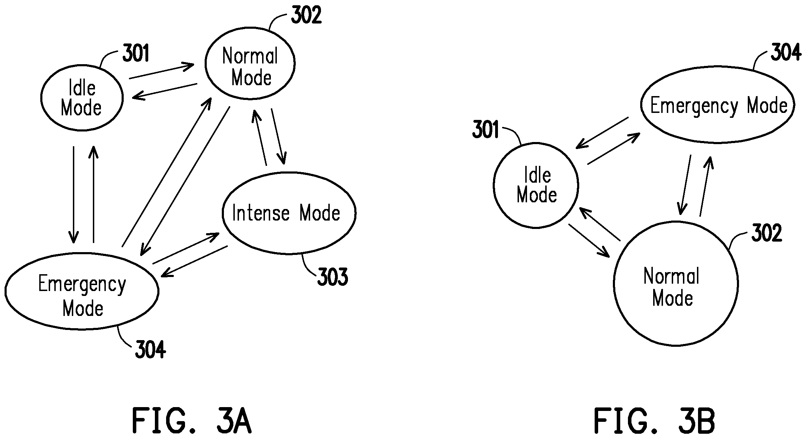

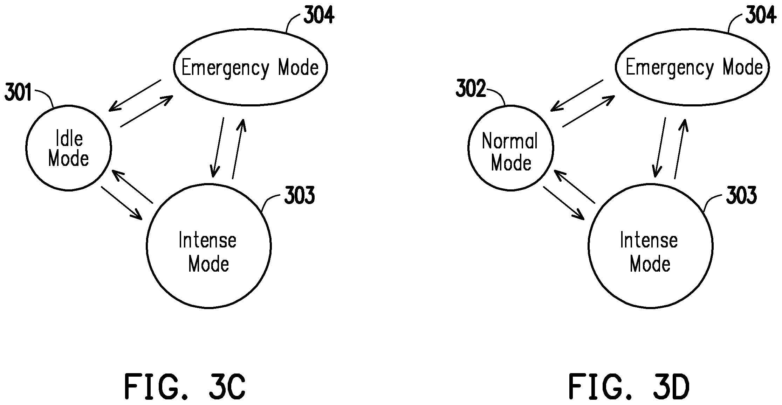

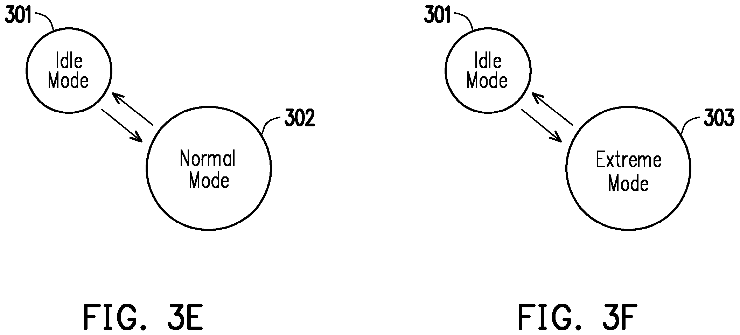

FIG. 3A to FIG. 3F are schematic diagrams of the status of the sensing equipment switching between different operation modes in different examples. Referring to FIG. 3A, in this exemplary embodiment, the UE 110 may support four operation modes and switch between a normal mode 302, an intense mode 303, an idle mode 301, and an emergency mode 304. Referring to FIG. 3B, in this exemplary embodiment, the UE 110 may support three operation modes and switch between the normal mode 302, the idle mode 301 and the emergency mode 304. Referring to FIG. 3C, in this exemplary embodiment, the UE 110 may support three operation modes and switch between the intense mode 303, the idle mode 301 and the emergency mode 304. Referring to FIG. 3D, in this exemplary embodiment, the UE 110 may support three operation modes and switch between the intense mode 303, the normal mode 302 and the emergency mode 304. Referring to FIG. 3E, in this exemplary embodiment, the UE 110 may support two operation modes and switch between the normal mode 302 and the idle mode 301. Referring to FIG. 3F, in this exemplary embodiment, the UE 110 may support two operation modes and switch between the intense mode 303 and the idle mode 301.

In some embodiments, referring to FIG. 1 and FIG. 2, the UE 110 may request the SSMF 280 to provide services through executing a network registration program to enable a collaborative sensing service. Furthermore, in a condition where the registration of the UE 110 is received by the AMF 260, the AMF 260 may notify that SSMF 280 to configure and schedule parameters and resources needed for the UE 110 to operate the collaborative sensing service.

In some embodiments, the UE 110 may receive a first collaborative sensing configuration information of a collaborative sensing service from the SSMF 280 and enable the collaborative sensing service based on the first collaborative sensing configuration information. The first collaborative sensing configuration information is configured to indicate a service mode of the collaborative sensing service to be activated or a sensing mode of the collaborative sensing service to be activated. In some embodiments, the service modes of the collaborative sensing service include the periodic collaborative sensing service, the aperiodic collaborative sensing service, the emergency broadcast service, the emergency collaborative sensing service, or any combination thereof. In some embodiments, the sensing modes of the collaborative sensing service include a monostatic sensing and a bistatic sensing.

In some embodiments, when the periodic collaborative sensing service or the aperiodic collaborative sensing service is activated, the UE 110 transmits a first sensing information to the SSMF 280. The UE 110 receives an integrated sensing report associated with the first sensing information from the SSMF 280. Afterwards, the UE 110 executes an operation based on the integrated sensing report. In some embodiments, the transmission may be direct transmission or indirect transmission through other units/devices. For example, when the UE 110 transmits the information to the SSMF 280, the UE 110 may directly transmit the information to the SSMF 280. In another example, when the UE 110 transmits the information to the SSMF 280, the UE 110 may directly transmit the information to the wireless access point 120 first, and then the wireless access point 120 directly transmits the information to the AMF260, and then the AMF260 directly transmits the information to the SSMF 280. In an embodiment, the reception may be direct reception or indirect reception through other units/devices. For example, when the UE 110 receives the information from the SSMF 280, the UE 110 may directly receive the information transmitted from the SSMF 280. In another example, when the UE 110 receives the information from the SSMF 280, the AMF 260 may directly receive the information transmitted from the SSMF 280 first, and then the wireless access point 120 directly receives the information transmitted from the AMF 260, and then the UE 110 directly receives the information transmitted from the wireless access point 120.

In some embodiments, the operations executed by the UE 110 based on the integrated sensing report may be, but not limited to, sensing parameter correction (such as sensing radar parameter correction) or navigation route planning, etc.

In some embodiments, when a first-level periodic collaborative sensing service is activated, the first sensing information may include local sensing data of the UE 110 or local behavior data of the UE 110.

In some embodiments, local sensing data may include sensing point cloud data, map data, range profile, noise profile, or any combination thereof, etc. Local behavior data may include a moving direction, a moving speed, a global positioning system (GPS) information of the UE 110, or any combination thereof, etc.

In some embodiments, when a second-level periodic collaborative sensing service or an aperiodic collaborative sensing service is activated, the first sensing information may be generated through executing sensing data integration based on a second sensing information of a sensing equipment and a third sensing information generated by the UE 110. When the second-level periodic collaborative sensing service is activated, the foregoing third sensing information may be obtained through the UE 110 executing a monostatic sensing.

In some embodiments, the UE 110 receives a second collaborative sensing configuration information from the SSMF 280. The second collaborative sensing configuration information includes an equipment identification information of a sensing equipment. After the UE 110 established communication with the sensing equipment using the equipment identification information of the sensing equipment, the UE 110 may receive the second sensing information transmitted by the sensing equipment. The UE 110 may execute a sensing data integration based on the second sensing information and the third sensing information sensed by the UE 110 to generate a first sensing information.

In some embodiments, when a second-level periodic collaborative sensing service is activated, the first sensing information may be generated through the UE 110 executing the bistatic sensing together with the sensing equipment.

In some embodiments, the UE 110 receives the second collaborative sensing configuration information from the SSMF 280. The second collaborative sensing configuration information includes an equipment identification information of a sensing equipment. After the UE 110 established communication with the sensing equipment using the equipment identification information of the sensing equipment, the UE 110 executes the bistatic sensing together with the sensing equipment to generate a first sensing information. One of the sensing equipment and the UE 110 is a sensing signal transmitter of the bistatic sensing. Another one of the sensing equipment and the UE 110 is a sensing signal receiver of the bistatic sensing.

In some embodiments, in response to receiving the second collaborative sensing configuration information from the SSMF 280, the UE 110 serving as the collaborator may switch to an operation mode that supports a periodic collaborative sensing service or an aperiodic collaborative sensing service. The second collaborative sensing configuration information includes an equipment identification information of a sensing equipment serving as the requester and a collaborator indication. The collaborator indication is configured to indicate the UE 110 serving as the collaborator. The UE 110 serving as the collaborator transmits the first sensing information to the sensing equipment serving as the requester.

The following describes an embodiment of a registration program for the collaborative sensing service.

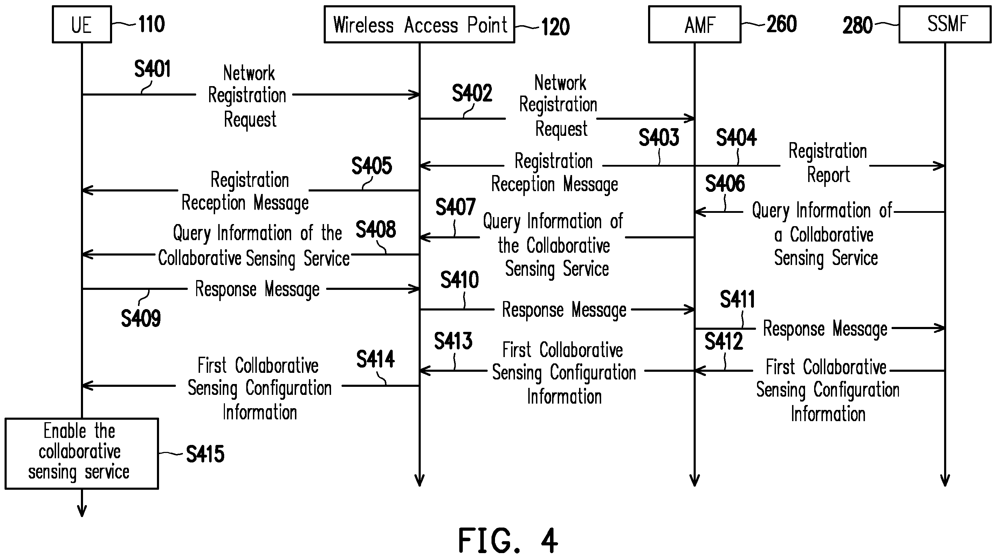

FIG. 4 is a flow chart of a processing method using integrated sensing and communication technology according to an exemplary embodiment. In some embodiments, the UE 110 may enable the collaborative sensing service through executing and accomplishing the registration program for the collaborative sensing service. When the unregistered UE 110 is located within a service range (i.e. overage region) of the wireless access point 120, the UE 110 may transmit a network registration request to the AMF 260 (which may be a second network entity). Please refer to FIG. 4. In step S401, the UE 110 transmits the network registration request to the wireless access point 120. In response to receiving the network registration request transmitted by the UE 110, the wireless access point 120 performs an AMF selection. In step S402, the wireless access point 120 transmits the network registration request received from the UE 110 to the selected AMF 260.

The foregoing network registration request may carry with basic information including a registration type, slice selection information, a subscriber permanent identifier (SUPI), a temporary user identification (ID), a security parameter, or any combination thereof, etc.

In some embodiments, the network registration request transmitted by the UE 110 may further include capability indication information indicating whether the UE 110 has the capability to apply with the collaborative sensing service. From another perspective, in some embodiments, the network registration request transmitted by the UE 110 may further include capability indication information indicating whether the UE 110 supports ISAC functions.

When the network registration request of UE 110 is accepted by the AMF 260, the AMF 260 transmits a registration reception message to the UE 110. In step S403, the AMF 260 transmits a registration reception message to the wireless access point 120. In step S405, the wireless access point 120 transmits the registration reception message to the UE 110. In other words, the AMF 260 transmits the registration reception message to the UE 110 through the wireless access point 120. On the other hand, in step S404, when the network registration request of the UE 110 is accepted by the AMF 260, if the UE 110 has the capability to apply with the collaborative sensing service or supports the ISAC functions, the AMF 260 transmits a registration report to the SSMF 280. The foregoing registration report is configured to inform the SSMF 280 that the UE 110 that has the capability to apply with the collaborative sensing service or supports the ISAC functions has been registered. That is, in the step S404, the SSMF 280 receives the registration report associated with the UE 110 from the AMF 260.

In response to the received registration report, the SSMF 280 transmits a query information of the collaborative sensing service to the UE 110. That is, the UE 110 may receive the query information of the collaborative sensing service from the SSMF 280 (which may be a first network entity) through the AMF 260. In some embodiments, the SSMF 280 transmits the query information of the collaborative sensing service to the UE 110 through the AMF 260 and the wireless access point 120. Specifically, in step S406, the SSMF 280 transmits the query information of the collaborative sensing service to the AMF 260. In step S407, the AMF 260 transmits the query information of the collaborative sensing service received from the SSMF 280 to the wireless access point 120. In step S408, the wireless access point 120 transmits the query information of the collaborative sensing service received from the AMF 260 to the UE 110.

In some embodiments, the query information of a collaborative sensing service is configured to inquire whether the UE 110 participates in the collaborative sensing service. The query information of the collaborative sensing service is configured to inquire service authority information. The query information of the collaborative sensing service is configured to inquire the sensing performance of the UE 110 and the operation modes that the UE 110 may support.

In response to the received query information of the collaborative sensing service, the UE 110 transmits a response message for the query information. In some embodiments, in the step S409, the UE 110 transmits the response message for the query information to the wireless access point 120. In the step S410, the wireless access point 120 transmits the response message received from the UE 110 to the AMF 260. In step S411, the AMF 260 transmits the response message received from the wireless access point 120 to the SSMF 280.

In some embodiments, the foregoing response message is configured to indicate whether the UE 110 participates in the collaborative sensing service. In some embodiments, the foregoing response message is configured to indicate an authority flag of an authority level. The authority flag may include a payment flag, an authorization flag, a service flag, or any combination thereof, etc. The foregoing response message is configured to indicate a sensing capability parameter of the UE 110, such as a maximum detectable distance, a maximum detectable speed, a distance resolution, a speed resolution, a visual range, an angle resolution, a maximum power, an antenna array parameter, a radar algorithm used (such as frequency modulated continuous wave (FMCW), pulse radar), a frequency band used, a bandwidth used, a memory size, or any combination thereof, etc. The foregoing response message is configured to indicate an operation mode that the UE 110 may support.

In response to the received response message, the SSMF 280 transmits a first collaborative sensing configuration information of the collaborative sensing service to the UE 110. In other words, in response to transmitting the response message, the UE 110 receives the first collaborative sensing configuration information of the collaborative sensing service from the SSMF 280. In some embodiments, the SSMF 280 transmits a first collaborative sensing configuration information of the collaborative sensing service to the UE 110 through the AMF 260 and the wireless access point 120. Specifically, in step S412, the SSMF 280 transmits a first collaborative sensing configuration information to the AMF 260. In step S413, the AMF 260 transmits the first collaborative sensing configuration information received from the SSMF 280 to the wireless access point 120. In step S414, the wireless access point 120 transmits the first collaborative sensing configuration information received from the AMF 260 to the UE 110. After receiving the first collaborative sensing configuration information, in step S415, the UE 110 enables the collaborative sensing service based on the first collaborative sensing configuration information. That is, the UE 110 may activate the corresponding collaborative sensing service according to the operation mode specified by the first collaborative sensing configuration information.

In some embodiments, the first collaborative sensing configuration information may be configured to specify an operation mode and a service type. In addition, the first collaborative sensing configuration information may be configured to indicate a configuration parameter related to the corresponding collaborative sensing service.

The following describes the embodiments of the first-level periodic collaborative sensing service.

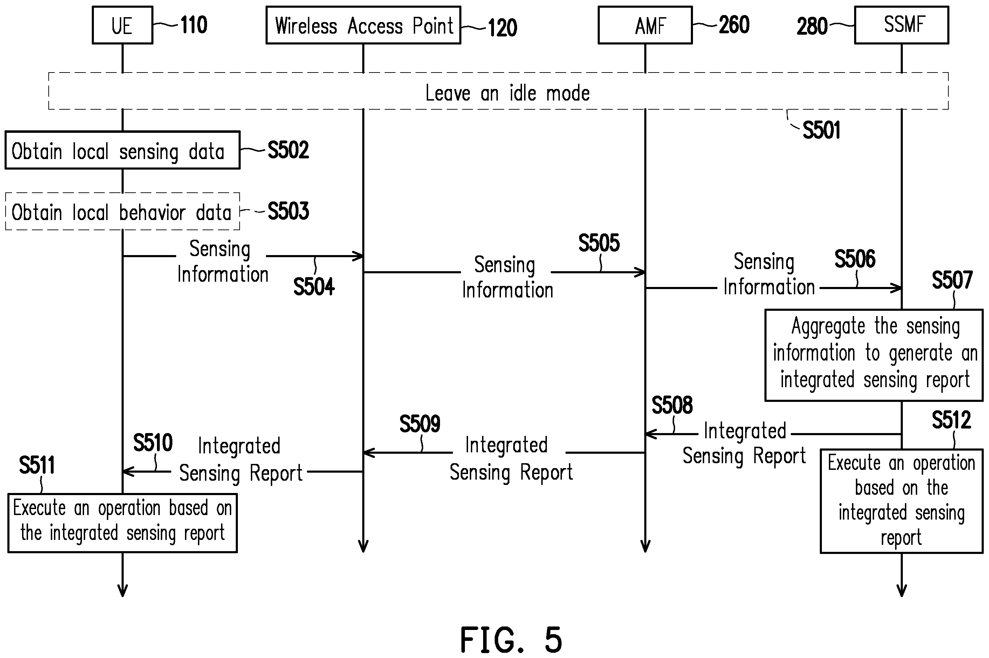

FIG. 5 is a flow chart of activating a periodic collaborative sensing service according to an exemplary embodiment. Please refer to FIG. 5. In FIG. 5, the steps marked by the dotted boxes represent optional execution or execution or non-execution according to the actual situation. In step S501, the UE 110 leaves the idle mode. Specifically, the UE 110 operates in the operation mode that supports the periodic collaborative sensing service, and activates the periodic collaborative sensing service in this operation mode. In some embodiments, the UE 110 switches to the operation mode that supports the periodic collaborative sensing service to activate the periodic collaborative sensing service in the operation mode. For example, the UE 110 switches the operation mode thereof from the idle mode to one of the normal mode, the intense mode and the emergency mode. If the UE 110 is originally in the operation mode that supports the periodic collaborative sensing service, the step S501 may not be executed. In step S502, the UE 110 obtains local sensing data. In some embodiments, in the step S503, the UE 110 obtains local behavior data. In some embodiments, in the step S502 and/or the step S503, the UE 110 may obtain the local sensing data and/or the local behavior data through various sensors and/or applying various sensing technologies.

After the step S502 and/or the step S503, the UE 110 may transmit a sensing information to the SSMF 280. In some embodiments, in step S504, the UE 110 transmits the sensing information including the local sensing data and/or the local behavior data to the wireless access point 120. In step S505, the wireless access point 120 transmits the sensing information received from the UE 110 to the AMF 260. In step S506, the AMF 260 transmits the sensing information received from the wireless access point 120 to the SSMF 280.

In step S507, the SSMF 280 aggregates the sensing information of the UE 110 and the sensing information of other UEs to generate the integrated sensing report. That is, the SSMF 280 executes the sensing data integration based on the sensing information of the UE 110 and the sensing information of other UEs to generate the integrated sensing report. For example, the SSMF 280 performs data fusion with sensing results of multiple sensing units to generate the integrated sensing report. In some embodiments, the integrated sensing report may include sensing point cloud data, map data, range profile, noise profile, or any combination thereof, etc.

After the integrated sensing report is generated, the SSMF 280 transmits the integrated sensing report to the UE 110. In some embodiments, in step S508, the SSMF 280 transmits the integrated sensing report to the AMF 260. In step S509, the AMF 260 transmits the integrated sensing report received from the SSMF 280 to the wireless access point 120. In step S510, the wireless access point 120 transmits the integrated sensing report received from the AMF 260 to the UE 110.

After receiving the integrated sensing report, in step S511, the UE 110 may execute an operation based on the received integrated sensing report. In some embodiments, for obtaining more accurate sensing results, the UE 110 may correct and adjust the sensing parameters according to the received integrated sensing report.

In some embodiments, after the integrated sensing report is generated, in step S512, the SSMF 280 may further execute an operation based on the generated integrated sensing report. In some embodiments, the SSMF 280 may provide the integrated sensing reporting to a third-party application.

The following describes the embodiments of the second-level periodic collaborative sensing service.

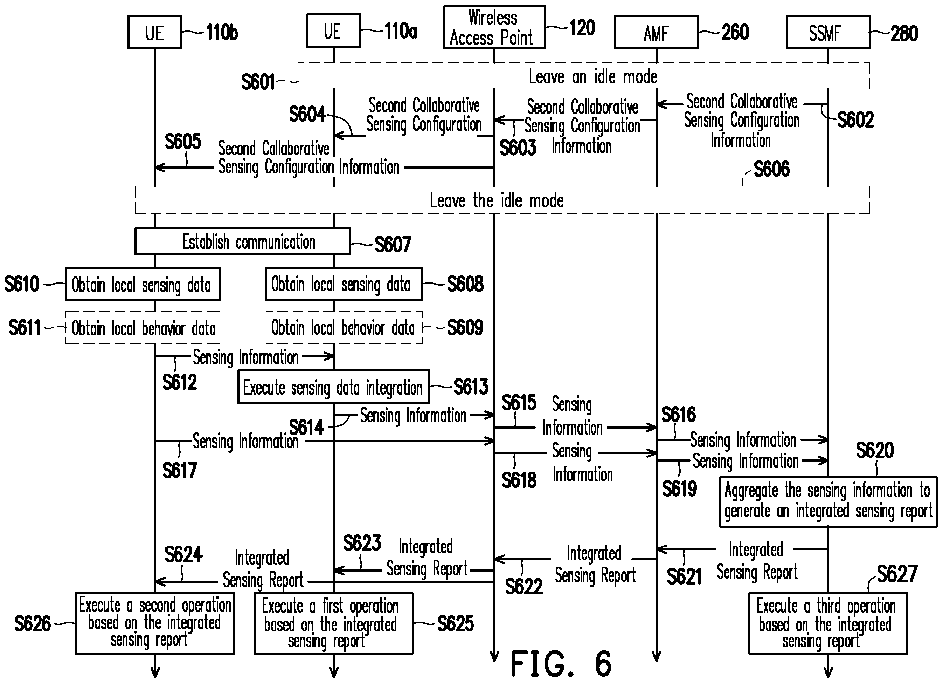

FIG. 6 is a flow chart of activating a periodic collaborative sensing service according to an exemplary embodiment. Please refer to FIG. 6. In this example, a UE 110a is the sensing equipment serving as the requester. A UE 110b is the sensing equipment serving as the collaborator. In FIG. 6, the steps marked by the dotted boxes represent optional execution or execution or non-execution according to the actual situation.

In step S601, the UE 110a leaves the idle mode. Specifically, the UE 110a operates in the operation mode that supports the periodic collaborative sensing service, and activates the periodic collaborative sensing service in this operation mode. In some embodiments, the UE 110a switches to an operation mode that supports a periodic collaborative sensing service to activate the periodic collaborative sensing service in the operation mode. For example, the UE 110s switches the operation mode thereof from the idle mode to one of the normal mode, the intense mode and the emergency mode. If the UE 110 is originally in the operation mode that supports the periodic collaborative sensing service, the step S601 may not be executed.

After the step S601, the UE 110a receives the second collaborative sensing configuration information from the SSMF 280. The second collaborative sensing configuration information includes an equipment identification information of a sensing equipment (that is, UE 1 10b) serving as the collaborator.

In some embodiments, through steps S602, S603 and S604, the UE 110a may receive the second collaborative sensing configuration information transmitted by the SSMF 280 and including the equipment identification information of the UE 110b. In this embodiment, the equipment identification information may include a media access control (MAC) address, a hardware number, and/or a relative location. Therefore, the UE 110a serving as the requester may learn the equipment identification information of the collaborator according to the received second collaborative sensing configuration information.

In addition, the UE 110b serving as the collaborator may receive the second collaborative sensing configuration information transmitted by the SSMF 280. In some embodiments, after the wireless access point 120 received the second collaborative sensing configuration information from the SSMF 280 through the AMF 260 in the steps S602-S603, the wireless access point 120 may transmit the second collaborative sensing configuration information to the UE 110a and the UE 110b in the steps S604-S605. The second collaborative sensing configuration information includes the equipment identification information of the UE 110a. The equipment identification information may include a MAC address, a hardware number, and/or a relative location. Therefore, the UE 110b serving as the collaborator may learn the equipment identification information of the requester according to the received second collaborative sensing configuration information.

In step S606, the UE 110b serving as the collaborator leaves the idle mode. That is, in response to receiving the second collaborative sensing configuration information from the SSMF 280, the UE 110b may leave the idle mode based on the collaborator indication in the second collaborative sensing configuration information. The UE 110b serving as the collaborator may switch to the operation mode that supports the periodic collaborative sensing service based on the received second collaborative sensing configuration information.

In step S607, the UE 110a and the UE 110b may establish communication with each other based on the equipment identification information in the respectively received second collaborative sensing configuration information. The communication between the UE 110a and the UE 110b may be such as Bluetooth communication or other communication links. After the step S607, the UE 110a and the UE 110b may generate the sensing information including the local sensing data and/or the local behavior data. In some embodiments, in step S608, the UE 110a obtains the local sensing data. In step S609, the UE 110a obtains the local behavior data. In an embodiment, the UE 110a may execute the monostatic sensing to obtain the sensing information including the local sensing data and/or the local behavior data. In step S610, the UE 110b obtains the local sensing data. In some embodiments, in step S611, the UE 110b further obtains the local behavior data.

In step S612, the UE 110b transmits the sensing information including the local sensing data of the UE 110b and/or the local behavior data of the UE 110b to the UE 110a. In step S613, the UE 110a executes the sensing data integration based on its own sensing information (including the local sensing data of the UE 110a and/or the local behavior data of the UE 110a) and the sensing information provided by the UE 1 10b. For example, the UE 110a may integrate the local sensing data of the UE 110a and the local sensing data of the UE 110b. For example, the local sensing data of the UE 110a and the local sensing data of the UE 110b are integrated, and/or the local behavior data of the UE 110a and the local behavior data of the UE 110b are integrated, so that the UE 110a obtains the sensing information including the integrated local sensing data and/or the integrated local behavior data. For another example, the local sensing data of the UE 110a and/or the local behavior data of the UE 110a are integrated to obtain the sensing information. In some embodiments, in the step S608 and/or the step S609, the UE 110a may generate and obtain the local sensing data and/or the local behavior data through various sensors and/or applying various sensing technologies. In the step S610 and/or the step S611, the UE 110b may generate and obtain the local sensing data and/or the local behavior data through various sensors and/or applying various sensing technologies.

Through steps S614, S615 and S616, the UE 110a transmits the obtained sensing information to the SSMF 280 through the wireless access point 120 and AMF 260. In some embodiments, the sensing information transmitted by the UE 110a may be a data integration result of the sensing data integration. Through steps S617, S618 and S619, the UE 110b transmits the sensing information of the UE 110b to the SSMF 280 through the wireless access point 120 and AMF 260 without through the UE 110a.

In step S620, the SSMF 280 aggregates the sensing information to generate an integrated sensing report. In an embodiment, the SSMF 280 aggregates the sensing information of the UE 110a and the sensing information of the UE 110b to generate the integrated sensing report. In an embodiment, the SSMF 280 aggregates the sensing information transmitted by the UE 110a (including the integrated local sensing data of the UE 110a and the integrated local sensing data of the UE 110b) and/or other sensing information to generate the integrated sensing report. Through steps S621 and S622, the SSMF 280 transmits the integrated sensing report to the wireless access point 120. In step S623, the wireless access point 120 transmits the integrated sensing report to the UE 110a serving as the requester. In step S624, the wireless access point 120 further transmits the integrated sensing report to the UE 110b serving as the collaborator without through the UE 110a.

In step S625, the UE 110a executes a first operation based on the received integrated sensing report. In step S626, the UE 110b executes a second operation based on the received integrated sensing report. In step S627, the SSMF 280 executes a third operation based on the generated integrated sensing report.

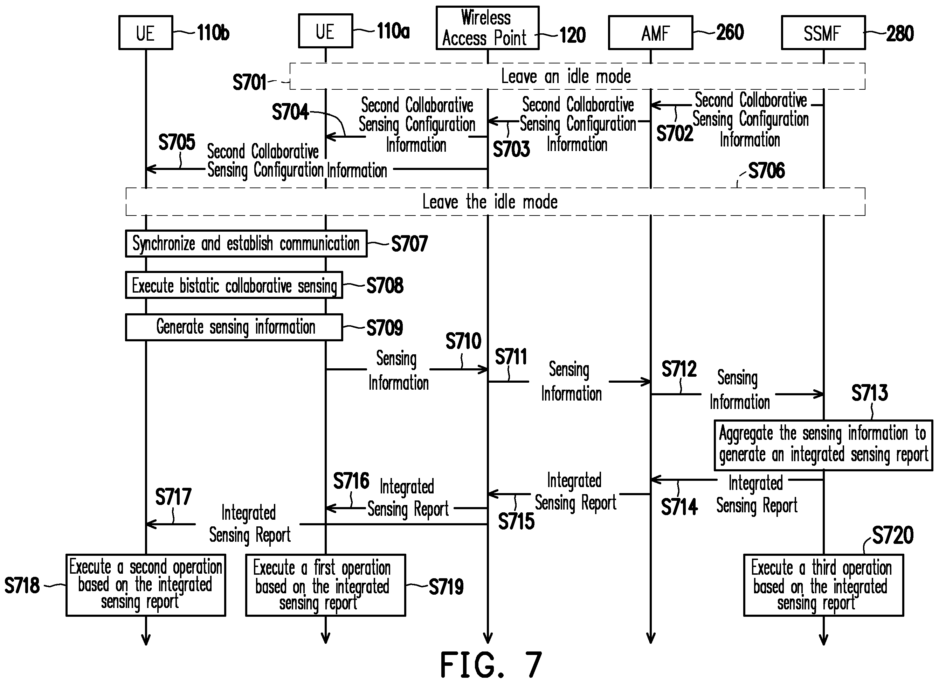

FIG. 7 is a flow chart of activating a periodic collaborative sensing service according to an exemplary embodiment. Please refer to FIG. 7. In this example, the UE 110a is the sensing equipment serving as the requester. The UE 110b is the sensing equipment serving as the collaborator. In FIG. 7, the steps marked by the dotted boxes represent optional execution or execution or non-execution according to the actual situation.

In step S701, the UE 110a leaves the idle mode. Furthermore, the UE 110a switches to the operation mode that supports the periodic collaborative sensing service to activate the periodic collaborative sensing service in the operation mode. The UE 110a receives the second collaborative sensing configuration information from the SSMF 280. The second collaborative sensing configuration information includes the equipment identification information of the sensing equipment (that is, the UE 110b) serving as the collaborator.

Through steps S702, S703 and S704, the UE 110a may receive the second collaborative sensing configuration information transmitted by the SSMF 280 and including the equipment identification information of the UE 110b. Therefore, the UE 110a serving as the requester may learn the equipment identification information of the collaborator.

In addition, through steps S702, S703 and S705, the UE 110b may receive the second collaborative sensing configuration information transmitted by the SSMF 280. The second collaborative sensing configuration information includes the collaborator indication and the equipment identification information of the UE 110a. Therefore, the UE 110b serving as the collaborator may learn the equipment identification information of the requester.

In step S706, the UE 110b serving as the collaborator leaves the idle mode. That is, in response to receiving the second collaborative sensing configuration information from the SSMF 280, the UE 110b may leave the idle mode based on the collaborator indication in the second collaborative sensing configuration information. The UE 110b serving as the collaborator may switch to an operation mode that supports a periodic collaborative sensing service.

It is worth mentioning that in this example, the second collaborative sensing configuration information may be configured to designate one of the requester and the collaborator to serve as a signal transmitting end of a monostatic sensing, and may be configured to designate another one of the requester and the collaborator to serve as a signal receiving end of the monostatic sensing. For example, the SSMF 280 may assign the UE 110a to serve as the signal receiving end of a monostatic sensing, and assign the UE 110b as the signal transmitting end of the monostatic sensing. The SSMF 280 may notify the UE 110a to serve as the signal receiving end of the monostatic sensing through the second collaborative sensing configuration information, and notify the UE 110b to serve as the signal transmitting end of the monostatic sensing through the second collaborative sensing configuration information.

In step S707, the UE 110a and the UE 110b may perform timing synchronization and establish communication, such as Bluetooth communication or other communication links, with each other based on the equipment identification information in the respectively received second collaborative sensing configuration information. In step S708, the UE 110a and the UE 110b execute a bistatic collaborative sensing. In step S709, the UE 110a and the UE 110b may generate the sensing information according to the bistatic collaborative sensing. In an embodiment, the signal receiving end of a monostatic sensing may generate the sensing information. Therefore, when the UE 110a serving as the requester is assigned as the signal transmitting end of a monostatic sensing, the UE 110b serving as the collaborator may generate the sensing information and transmit the generated sensing information to the UE 110a. Through steps S710, S711 and S712, the UE 110a transmits the sensing information to the SSMF 280.

In step S713, the SSMF 280 aggregates the sensing information to generate an integrated sensing report. Through steps S714 and S715, the SSMF 280 transmits the integrated sensing report to the wireless access point 120. In step S716, the wireless access point 120 transmits the integrated sensing report to the UE 110a serving as the requester. In step S717, the wireless access point 120 transmits the integrated sensing report to the UE 110b serving as the collaborator.

In step S719, the UE 110a executes a first operation based on the integrated sensing report. In step S718, the UE 110b executes a second operation based on the integrated sensing report. In step S720, the SSMF 280 executes a third operation based on the integrated sensing report.

The following describes the embodiments of the aperiodic collaborative sensing service.

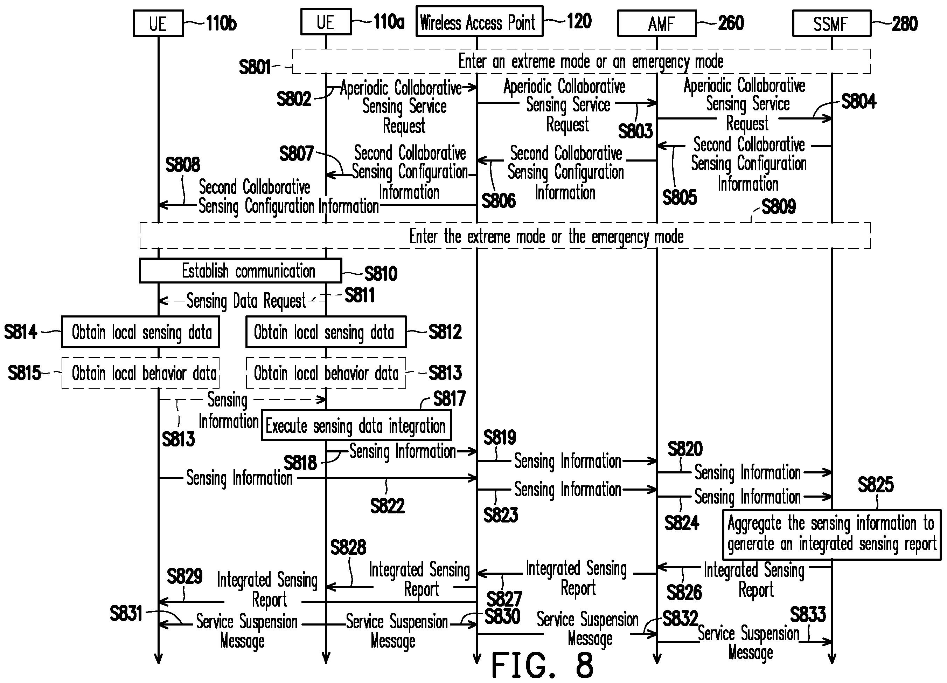

FIG. 8 is a flow chart of activating an aperiodic collaborative sensing service according to an exemplary embodiment. Please refer to FIG. 8. In this example, the UE 110a is the sensing equipment serving as the requester. The UE 110b is the sensing equipment serving as the collaborator. In FIG. 8, the steps marked by the dotted boxes or dotted arrows represent optional execution or execution or non-execution according to the actual situation.

In step S801, the UE 110a enters the intense mode or the emergency mode. Furthermore, the UE 110a switches to the operation mode that supports an aperiodic collaborative sensing service to activate the aperiodic collaborative sensing service in the operation mode. Specifically, the UE 110a switches the operation mode thereof to operates in the intense mode or the emergency mode, and then activates the aperiodic collaborative sensing service in the switched operation mode. After entering the intense mode or the emergency mode, the UE 110a may transmit a service request of the aperiodic collaborative sensing service to the SSMF (which may be a first network entity) 280. In response to transmitting the service request of the aperiodic collaborative sensing service, the UE 110a may receive the second collaborative sensing configuration information of the aperiodic collaborative sensing service from the SSMF 280.

As shown in FIG. 8, the UE 110a transmits the service request of the aperiodic collaborative sensing service to the SSMF 280. In some embodiments, through steps S802, S803 and S804, the UE 110a transmits the service request of the aperiodic collaborative sensing service to the SSMF 280 through the wireless access point 120 and the AMF 260. In response to the service request of the aperiodic collaborative sensing service, the SSMF 280 may decide whether to grant the service request. If the SSMF 280 agrees to the service request of the aperiodic collaborative sensing service, the SSMF 280 may transmit the second collaborative sensing configuration information of the aperiodic collaborative sensing service to the UE 110a. In some embodiments, through steps S805, S806 and S807, the SSMF 280 may transmit the second collaborative sensing configuration information of the aperiodic collaborative sensing service to the UE 110a serving as the requester through the AMF 260 and the wireless access point 120. The UE 110a may obtain the equipment identification information of the collaborator (that is, UE 110b) from the second collaborative sensing configuration information.

On the other hand, through steps S805, S806 and S808, the SSMF 280 may further transmit the second collaborative sensing configuration information of the aperiodic collaborative sensing service to the UE 110b serving as the collaborator through the AMF 260 and the wireless access point 120. The SSMF 280 uses the second collaborative sensing configuration information to inform the UE 110b to serve as the collaborator of the aperiodic collaborative sensing service. In addition, the UE 110b may obtain the equipment identification information of the requester (that is, UE 110a) from the second collaborative sensing configuration information.

In step S809, the UE 110b serving as the collaborator enters the intense mode or the emergency mode. Furthermore, the UE 110b switches to an operation mode that supports an aperiodic collaborative sensing service to activate the collaborative function of the aperiodic collaborative sensing service. Specifically, the UE 110b switches the operation mode thereof to operates in the intense mode or the emergency mode, and then activates the aperiodic collaborative sensing service in the switched operation mode. In step S810, the UE 110a and the UE 110b may establish communication based on each other's equipment identification information in the respectively received second collaborative sensing configuration information.

After the step S810, the UE 110a and the UE 110b may generate the sensing information including the local sensing data and/or the local behavior data. In some embodiments, when the UE 110a serving as the requester determines that immediate collaborative perception is needed, the UE 110a transmits a sensing data request to the UE 110b serving as the collaborator in step S811. In detail, compared with the periodic collaborative sensing service which may be regularly activated, the aperiodic collaborative sensing service may be determined by the UE 110a based on the current scenario whether to be activated. In step S812, the UE 110a obtains local sensing data of the UE 110a. In step S813, the UE 110a obtains local behavior data of the UE 110a. In step S814, the UE 110b obtains local sensing data of the UE 110b. In step S815, the UE 110b obtains local behavior data of the UE 110b. In some embodiments, in the step S812 and/or the step S813, the UE 110a may generate and obtain the local sensing data and/or the local behavior data through various sensors and/or applying various sensing technologies. In the step S814 and/or the step S815, the UE 110b may generate and obtain the local sensing data and/or the local behavior data through various sensors and/or applying various sensing technologies.

In step S816, in response to the received sensing data request, the UE 110b serving as the collaborator transmits the sensing information including the local sensing data of the UE 110b and/or the local behavior data of the UE 110b to the UE 110a. In other words, in response to the sensing data request, the UE 110b may generate and obtain the local sensing data and/or the local behavior data, and then transmits the sensing information including the obtained local sensing data and/or the obtained local behavior data to the UE 110a. Alternately, in other embodiments, the UE 110b serving as the collaborator may spontaneously transmit a sensing information including the local sensing data of the UE 110b and/or the local behavior data of the UE 110b to the UE 110a based on other judgment conditions.

In step S817, the UE 110a executes the sensing data integration based on the sensing information including the local sensing data of the UE 110a and/or the local behavior data of the UE 110a and the sensing information provided by the UE 110b. Through steps S818, S819 and S820, the UE 110a transmits the sensing information to the SSMF 280 through the wireless access point 120 and AMF 260. In some embodiments, the sensing information transmitted by the UE 110a may be the data integration result of the sensing data integration. Through steps S822, S823 and S824, the UE 110b transmits the sensing information to the SSMF 280 through the wireless access point 120 and AMF 260 without through the UE 110a.

In step S825, the SSMF 280 aggregates the sensing information to generate an integrated sensing report. Through steps S826 and S827, the SSMF 280 transmits the integrated sensing report to the wireless access point 120. In step S828, the wireless access point 120 transmits the integrated sensing report to the UE 110a serving as the requester. In step S829, the wireless access point 120 further transmits the integrated sensing report to the UE 110b serving as the collaborator without through the UE 110a.

When the UE 110a determines that the need for the aperiodic collaborative sensing service is over, the UE 110a transmits a service suspension message of the aperiodic collaborative sensing service to the sensing equipment serving as the collaborator (i.e. the UE 110b) and the SSMF 280. In some embodiments, through steps S830, S832 and S833, the UE 110a transmits the service suspension message of the aperiodic collaborative sensing service to the SSMF 280. Through step S831, the UE 110a transmits the service suspension message of the aperiodic collaborative sensing service to the UE 110b serving as the collaborator to terminate the communication connection between the two.

The following describes the embodiments of the emergency broadcast service.

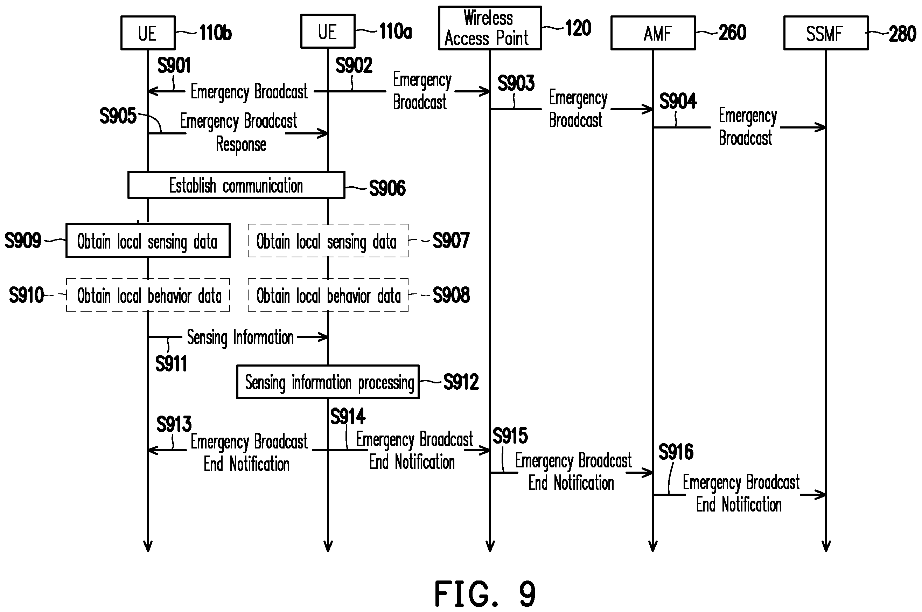

FIG. 9 is a flow chart of activating an emergency broadcast according to an exemplary embodiment. Please refer to FIG. 9. In this example, the UE 110a is the sensing equipment serving as the requester. The UE 110b is the sensing equipment serving as the collaborator. In addition, the UE 110a serving as the requester initiates an emergency broadcast. In FIG. 9, the steps marked by the dotted boxes represent optional execution or execution or non-execution according to the actual situation.

In some embodiments, when the UE 110a determines that an emergency event occurs, the UE 110a broadcasts an emergency broadcast message of the collaborative sensing service, such that the sensing equipment as the collaborator (such as UE 110b) and the SSMF 280 receive the emergency broadcast message. As shown in FIG. 9, in step S901, the UE 110b, which is located within the broadcast range of the UE 110a and serves as the collaborator, may receive the emergency broadcast message from the UE 110a. Through steps S902, S903 and S904, the SSMF 280 may receive the emergency broadcast message from the UE 110a through the wireless access point 120 within the broadcast range of the UE 110a.

In some embodiments, the emergency broadcast message is configured to broadcast urgent collaborative sensing needs. The emergency broadcast message may include service authority information. The emergency broadcast message includes a specific message identifier, such that the sensing equipment that are unable to provide assistance to decide to ignore the emergency broadcast message according to the specific message identifier, thereby avoiding communication interference caused by the broadcast behavior.

In step S905, in response to the received emergency broadcast message, the UE 110b serving as the collaborator may return an emergency broadcast response to the UE 110a. The emergency broadcast response may include a sensing capability parameter of the collaborator. The sensing capability parameter may be, but not limited to, such as a maximum detectable distance, a maximum detectable speed, a distance resolution, a speed resolution, a visual range, an angle resolution, a maximum power, an antenna array parameter, a radar algorithm used, a frequency band used, a bandwidth used, a memory size, or any combination thereof, etc. In addition, the emergency broadcast response is configured to indicate that the UE 110b serving as the collaborator agrees to assist in an emergency collaborative perception.

In step S906, in response to the received emergency broadcast response returned by the sensing equipment, the UE 1 10b, the UE 110a establishes communication with the UE 1 10b. The emergency broadcast response may include the equipment identification information of the UE 110b, and the UE 110a establishes communication with the UE 110b according to the equipment identification information in the received emergency broadcast response. In some embodiments, in step S907, the UE 110a obtains local sensing data of the UE 110a. In step S908, the UE 110a obtains local behavior data of the UE 110a. In step S909, the UE 110b obtains local sensing data of the UE 110b. In step S910, the UE 110b obtains local behavior data of the UE 110b.

In step S911, after the received emergency broadcast, the sensing equipment UE 110b serving as the collaborator transmits the sensing information including the local sensing data of the UE 110b obtain in the step S909 and/or the local behavior data of the UE 110b obtain in the step S910 to the UE 110a. The UE 110a receives the sensing information generated by the sensing equipment UE 110b serving as the collaborator in response to the emergency broadcast. In step S912, the UE 110a executes the sensing data integration based on its own sensing information (including the local sensing data of the UE 110a and/or the local behavior data of the UE 110a) and the sensing information provided by the UE 110b, or executes an operation using the sensing information provided by the UE 110b. In an embodiment, when transmitting the emergency broadcast message, the UE 110a may directly execute the operation based on a data fusion result of the sensing information of the UE 110a and the sensing information of the UE 110b to meet emergency needs. In an embodiment, when transmitting an emergency broadcast message, the UE 110a may directly execute an operation based on the sensing information of the UE 110b to meet emergency needs.

Later, when the UE 110a determines that the emergency event is released or the emergency event has lasted for a period of time, the UE 110a may transmit an emergency broadcast end notification to the sensing equipment UE 110b serving as the collaborator and the SSMF 280. As shown in FIG. 9, in step S913, the UE 110a may transmit the emergency broadcast end notification to the UE 110b. Through steps S914, S915 and S916, the UE 110a may transmit the emergency broadcast end notification to the SSMF 280. The emergency broadcast end notification may be configured to indicate the release of the emergency broadcast. In addition, when the emergency event has lasted for a period of time, the emergency broadcast end notification may be configured to switch the operation mode of the UE 110a to the emergency mode, such that the UE 110a activates the emergency collaborative sensing service in the emergency mode.

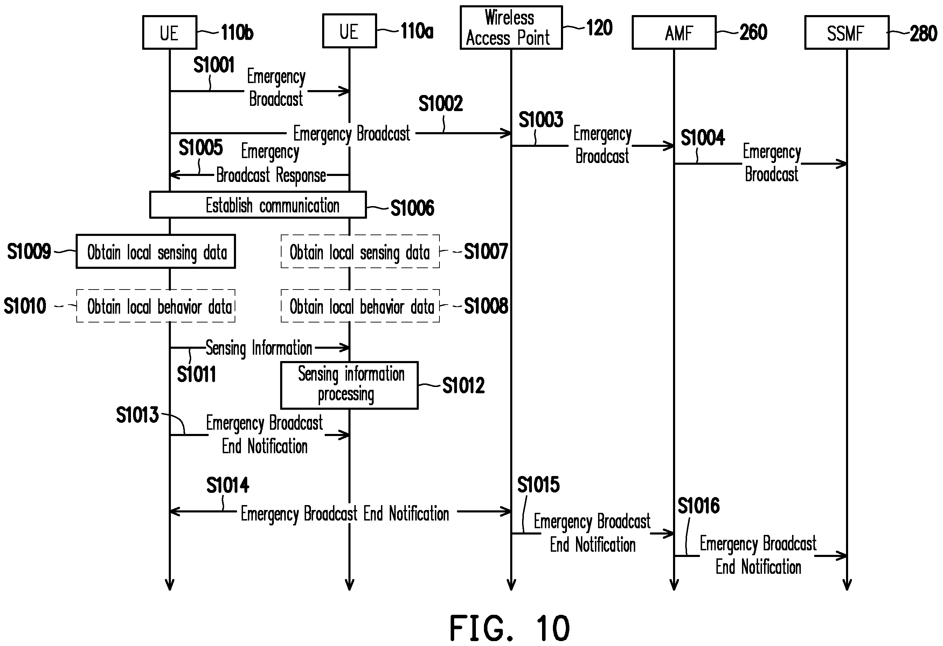

FIG. 10 is a flow chart of activating an emergency broadcast according to an exemplary embodiment. Please refer to FIG. 10. In this example, the UE 110a is the sensing equipment serving as the requester. The UE 110b is the sensing equipment serving as the collaborator. Furthermore, the UE 110b serving as the collaborator initiates the emergency broadcast. In FIG. 10, the steps marked by the dotted boxes represent optional execution or execution or non-execution according to the actual situation.

In some embodiments, when the UE 110b as the collaborator determines that the emergency event occurs, the UE 110b broadcasts the emergency broadcast message of the collaborative sensing service, such that the sensing equipment UE 110a serving as the requester and the SSMF 280 receives the emergency broadcast message. As shown in FIG. 10, in step 51001, the UE 110a may receive an emergency broadcast message from the UE 110b. Through steps S1002, S1003, and S1004, the SSMF 280 may receive the emergency broadcast message from the UE 110b.

In some embodiments, the emergency broadcast message is configured to broadcast that the emergency event occurs in the surrounding. The emergency broadcast message includes a specific message identifier, such that the sensing equipment that are unable to provide assistance may decide to ignore the emergency broadcast message based on the specific message identifier, thereby avoiding communication interference caused by the broadcast behavior. The emergency broadcast message may include the sensing capability parameter of the collaborator (such as the UE 110b). The sensing capability parameter may be, but not limited to, such as the maximum detectable distance, the maximum detectable speed, the distance resolution, the speed resolution, the visual range, the angle resolution, the maximum power, the antenna array parameter, the radar algorithm used, the frequency band used, the bandwidth used, the memory size, or any combination thereof, etc.

In step S1005, in response to the received emergency broadcast message, the UE 110a may return the emergency broadcast response to the UE 110b. In step S1006, in response to the received emergency broadcast response returned by the sensing equipment (such as UE 1 10a), the UE 110b establishes communication with the sensing equipment. The emergency broadcast response may include the equipment identification information of the UE 110a, and the UE 110b establishes communication with the UE 110a according to the equipment identification information in the received emergency broadcast response.

In step S1007, the UE 110a obtains local sensing data. In step S1008, the UE 110a obtains local behavior data. In step S1009, the UE 110b obtains local sensing data. In step S1010, the UE 110b obtains local behavior data.

In step S1011, after transmitting the emergency broadcast, the UE 110b serving as the collaborator transmits a sensing information to the UE 110a. The UE 110a receives the sensing information generated by a sensing equipment serving as the collaborator (such as UE 110b) in response to the emergency broadcast. In step S1012, the UE 110a executes the sensing data integration based on its own sensing information and the sensing information provided by the UE 110b, or uses the sensing information provided by the UE 1 10b. When receiving the emergency broadcast message, the UE 110a may directly execute an operation based on data fusion results of the sensing information of the UE 110a and the sensing information of the UE 110b to meet emergency needs. Alternatively, when receiving the emergency broadcast message, the UE 110a may directly execute the operation based on the sensing information of the UE 110b to meet emergency needs.

Later, when the UE 110b determines that the emergency event is released or the emergency event has lasted for a period of time, the sensing equipment UE 110b as the collaborator may transmit the emergency broadcast end notification to the UE 110a and the SSMF 280. As shown in FIG. 10, in step S1013, the UE 110b may transmit the emergency broadcast end notification to the UE 110a. Through steps S1014, S1015 and S1016, the UE 110b may transmit the emergency broadcast end notification to the SSMF 280.

The following describes the embodiments of the emergency collaborative sensing service.

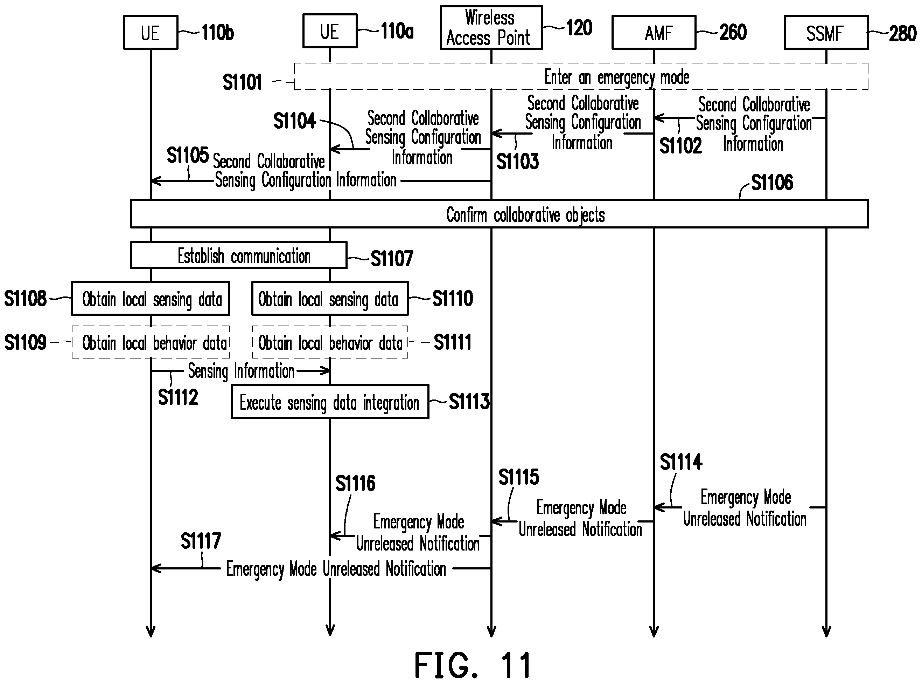

FIG. 11 is a flow chart of activating an emergency collaborative sensing service according to an exemplary embodiment. Please refer to FIG. 11. In this example, the UE 110a is the sensing equipment serving as the requester. The UE 110b is the sensing equipment serving as the collaborator. In FIG. 11, the steps marked by the dotted boxes or the dotted arrows represent optional execution or execution or non-execution according to the actual situation.

In some embodiments, the process shown in FIG. 11 may be executed after the process shown in FIG. 10. In an embodiment, when the emergency event has lasted for a period of time, the UE 110a transmits the emergency broadcast end notification to the SSMF 280. The emergency broadcast end notification may be served as a notification message to switch the operation mode of the UE 110a to the emergency mode.

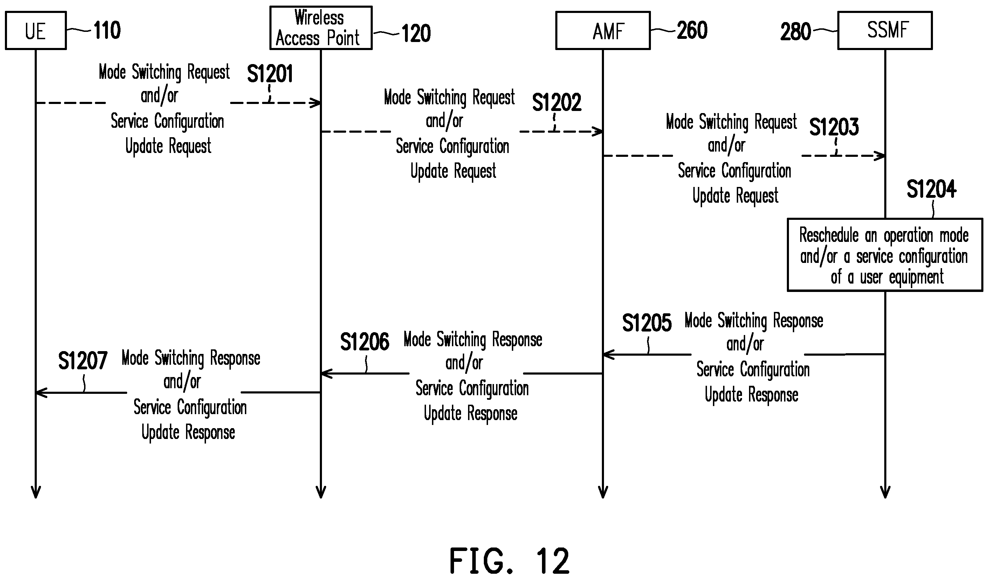

In step S1101, the UE 110a enters the emergency mode. In some embodiments, if the UE 110a is not operating in the emergency mode, the UE 110a may perform a mode switching process to enter the emergency mode. The mode switching process will be described in detail in the implementation content of FIG. 12.

When detecting that the UE 110a enters the emergency mode, the SSMF 280 may update collaborative sensing configuration information. For example, the SSMF 280 may be adapted to assist a collaborator of the UE 110a. The SSMF 280 may indicate collaborator information of a collaborative sensing service through a second collaborative sensing configuration information.

In response to activating the emergency collaborative sensing service, the UE 110a receives the second collaborative sensing configuration information from the SSMF 280. When detecting that the UE 110a enters the emergency mode, the SSMF 280 may transmit the second collaborative sensing configuration information to the wireless access point 120 through steps S1102 and S1103. In step S1104, the wireless access point 120 may transmit the second collaborative sensing configuration information to the UE 110a. When the collaborator of the UE 110a is changed, the second collaborative sensing configuration information transmitted to the UE 110a may be configured to indicate an equipment identification information of the new collaborator.

In step S1105, the wireless access point 120 may transmit the second collaborative sensing configuration information to the UE 110b. The second collaborative sensing configuration information transmitted to the UE 110b may be configured to indicate whether the UE 110b continues to serve as the collaborator of the UE 110a. In addition, when the UE 110b is a new collaborator, the second collaborative sensing configuration information transmitted to the UE 110b may be configured to indicate an equipment identification information of the UE 110a serving as the requester.

In step S1106, the UE 110a, the UE 110b and the SSMF 280 confirm the matching of collaborative objects. In step S1107, the UE 110a establishes communication with the UE 110b. In step S1108, the UE 110b obtains local sensing data. In step S1109, the UE 110b obtains local behavior data. In step S1110, the UE 110a obtains local sensing data. In step S1111, the UE 110a obtains local behavior data.

In step S1112, the UE 110b serving as the collaborator transmits the sensing information to the UE 110a. The UE 110a receives the sensing information transmitted by the sensing equipment (such as UE 110b) as the collaborator. In step S1113, the UE 110a executes the sensing data integration based on its own sensing information and the sensing information provided by the UE 110b.

In some embodiments, the SSMF 280 may determine at regular intervals whether to release the emergency mode of the UE 110a. Through the transmission of the notification that the emergency mode has not been released, the SSMF 280 may notify the collaborator and the requester whether the emergency mode has been released. As shown in FIG. 11, through step S1114 and step S1115, the SSMF 280 may transmit an emergency mode unreleased notification to the wireless access point 120. In step S1116, the wireless access point 120 transmits an emergency mode unreleased notification to the UE 1 10a. In step S1 117, the wireless access point 120 transmits an emergency mode unreleased notification to the UE 110b.

In some embodiments, an emergency mode unreleased notification is used to indicate whether the emergency mode of the UE 110a is released. In response to an emergency mode unreleased notification indicating mode release, the UE 110a may stop activating the emergency collaborative sensing service. In some embodiments, step S1102 to step S1117 may be executed repeatedly until the emergency mode is released.

The following describes the embodiments of mode switching and configuration update.

FIG. 12 is a flow chart of switching modes or updating a service configuration according to an exemplary embodiment. In FIG. 12, the steps marked by the dotted arrows represent optional execution or execution or non-execution according to the actual situation. Please refer to FIG. 12. When switching the operation mode or updating the service configuration of the collaborative sensing service is needed, the UE 110 may transmit the mode switching request or a service configuration update request of the collaborative sensing service to the SSMF 280. In response to transmitting the mode switching request or the service configuration update request of the collaborative sensing service to the SSMF 280, the UE 110 receives a mode switching response or a service configuration update response. In response to the received mode switching response or the service configuration update response, the UE 110 switches the operation mode or updates the service configuration. In other words, in response to the received mode switching request or the service configuration update request of the collaborative sensing service, the SSMF 280 reschedules the operation mode or the service configuration of the UE 110. The SSMF 280 transmits the mode switching response or the service configuration update response to the UE 110. Furthermore, the process shown in FIG. 12 may be the detailed operation details of switching operation modes in the foregoing embodiment.

As shown in FIG. 12, through step S1201, step S1202 and step S1203, the UE 110 may transmit the mode switching request and/or the service configuration update request of the collaborative sensing service to the SSMF 280. In step S1204, in response to receiving the mode switching request and/or the service configuration update request of the collaborative sensing service, the SSMF 280 reschedules the operation mode and/or the service configuration of the UE 110. For example, the SSMF 280 may switch the operation mode of the UE 110 from the normal mode to an emergency mode, and/or the SSMF 280 may reconfigure the collaborator of the collaborative sensing service. The SSMF 280 may transmit rescheduling information to the UE 100 through the mode switching response and/or the service configuration update response. Through step S1205, step S1206 and step S1207, the UE 110 may receive the mode switching response and/or the service configuration update response. Afterwards, the UE 110 may switch the operation mode of the collaborative sensing service or update the service configuration of the collaborative sensing service based on the mode switching response and/or the service configuration update response.

The following describes the embodiments of the third-party application registration.

In some embodiments, in response to receiving the sensing report access request of the third-party application through the AMF 260, the SSMF 280 may transmit an access authority message and an integrated sensing report to the third-party application. Through the transmission of the sensing report access request, the third-party application may notify the SSMF 280 of the sensing content that is sought to be accessed. In some embodiments, before the third-party application attempts to obtain the integrated sensing report, the third-party application may perform third-party application registration. The SSMF 280 may further confirm the access authority of the third-party application and manage the sensing content accessed by the third-party application.

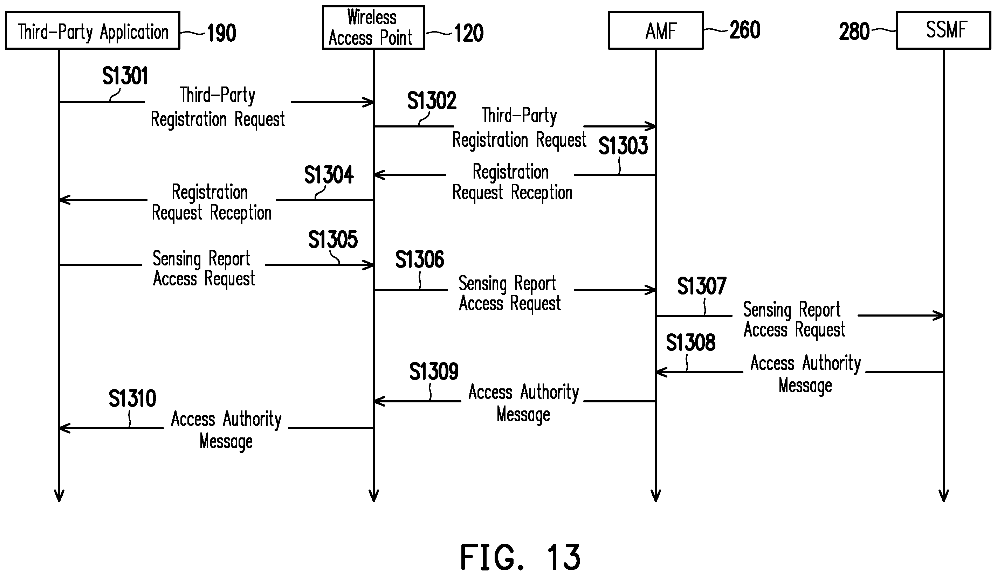

FIG. 13 is a flow chart of a third-party application requesting a sensing information according to an exemplary embodiment. Please refer to FIG. 13. When the third-party application 190 runs on a wireless communication device (the third-party application 190 may be, for example, the third-party application running on a mobile phone), the third-party application 190 needs to access the core network through the wireless access point 120 and performs a registration operation. Through steps S1301 and S1302, the third-party application 190 transmits a third-party registration request to the AMF 260 through the wireless access point 120. If the AMF 260 agrees to the registration of the third-party application 190, the AMF 260 may transmit a registration request reception to the third-party application 190 through steps S1303 and S1304.

Afterwards, in step S1305, the third-party application 190 transmits a sensing report access request. The sensing report access request may include an equipment identification information of the sensing equipment. Through steps S1306 and S1307, the SSMF 280 receives the sensing report access request from the third-party application 190. In response to receiving the sensing report access request of the third-party application 190, the SSMF 280 may evaluate the authority information of the third-party application 190 and determine whether to grant the sensing report access request of the third-party application 190.

Through steps S1308, S1309 and S1310, the SSMF 280 may transmit an access authority message to the third-party application 190. The authority information is configured to indicate whether the third-party application 190 has the authority to access an integrated sensing report.

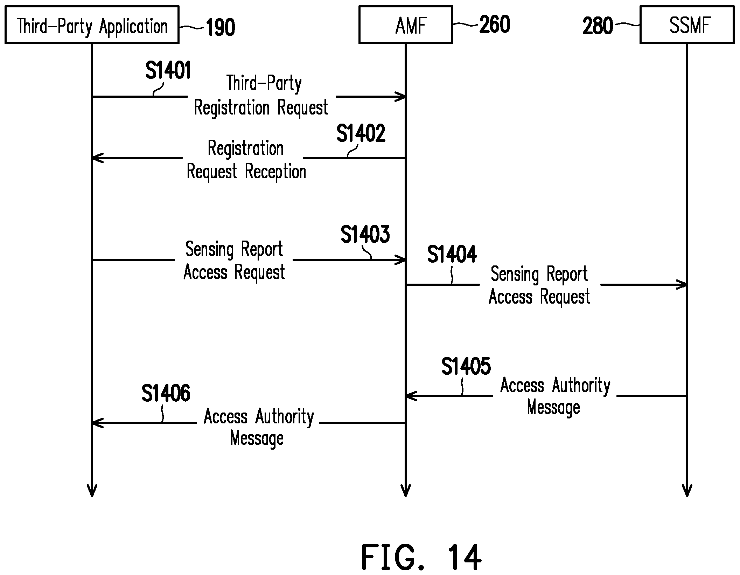

FIG. 14 is a flow chart of a third-party application requesting a sensing information according to an exemplary embodiment. Please refer to FIG. 14. When the third-party application 190 operates on the wired communication device (the third-party application 190 may be, for example, the server of the third-party application provider), the third-party application 190 may directly access the AMF 260 in the core network and perform the registration operation. Through step S1401, the third-party application 190 transmits the third-party registration request to the AMF 260. If the AMF 260 agrees to the registration of the third-party application 190, the AMF 260 transmits the registration request reception to the third-party application 190 through step S1402.

Afterwards, in step S1403, the third-party application 190 transmits the sensing report access request to the AMF 260. The sensing report access request may include an equipment identification information of the sensing equipment. Through step S1404, the SSMF 280 receives the sensing report access request of the third-party application 190 from the AMF 260. In response to receiving the sensing report access request of the third-party application 190, the SSMF 280 may evaluate the authority information of the third-party application 190 and determine whether to grant the sensing report access request of the third-party application 190. Through steps S1405 and S1406, the SSMF 280 may transmit an access authority message to the third-party application 190. The authority information is configured to indicate whether the third-party application 190 has the authority to access an integrated sensing report.

The following describes the embodiments of the local collaborative sensing data integration.

In some embodiments, compared with the SSMF 280 in the core network aggregating sensing information to generate an integrated sensing report, the wireless access point 120 that has sufficient computing power and is located locally may also aggregate sensing information of multiple sensing equipment. The service of aggregating sensing information of multiple sensing equipment by the wireless access point 120 may be called a local collaborative sensing data integration. The UE 110 may transmit a local collaborative sensing data integration request to the SSMF 280. The SSMF 280 receives the local collaborative sensing data integration request from the UE 110. In response to the wireless access point 120 supporting the local collaborative sensing data integration, the SSMF 280 transmits a local collaborative sensing data integration activation message to the wireless access point 120 and the UE 110. In response to the wireless access point 120 supporting the local collaborative sensing data integration, the UE 110 may receive the local collaborative sensing data integration activation message from the SSMF 280.

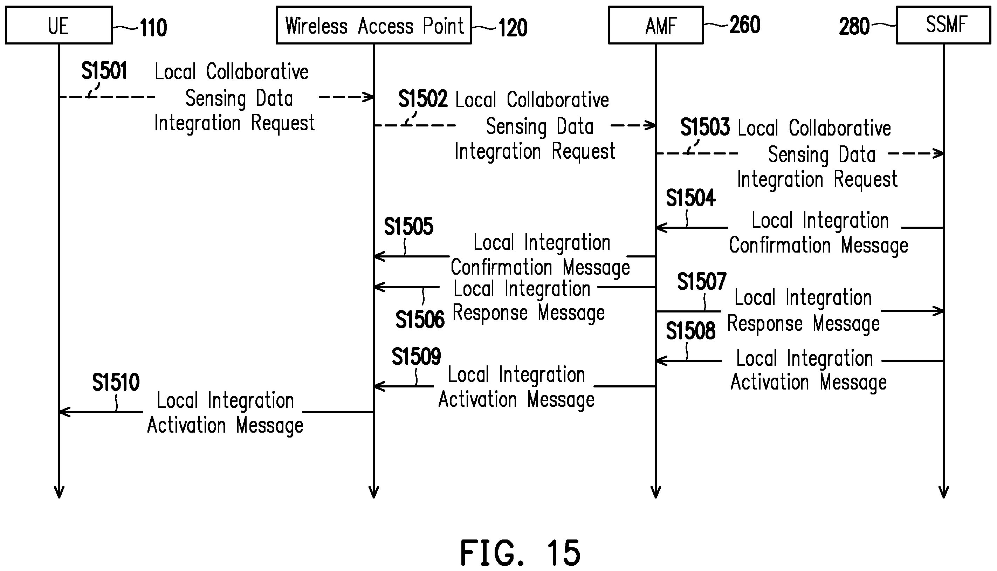

FIG. 15 is a flow chart for activating a local collaborative sensing data integration according to an exemplary embodiment. In FIG. 15, the steps marked by the dotted arrows represent optional execution or execution or non-execution according to the actual situation.

Please refer to FIG. 15. Through steps S1501, S1502 and S1503, the UE 110 may transmit a local collaborative sensing data integration request to the SSMF 280. Steps S1501, S1502 and S1503 may be optionally executed. In an embodiment, when the UE 100 determines that obtaining a lower-latency integrated sensing report is needed, the UE 100 may transmit the local collaborative sensing data integration request to the SSMF 280 to obtain the more immediate integrated sensing report. When the SSMF 280 receives the local collaborative sensing data integration request, the SSMF 280 confirms whether the wireless access point 120 near the UE 100 has sufficient resources to support the local collaborative sensing data integration. Alternatively, when the SSMF 280 determines that the UE 100 needs the lower-latency sensing integration report, the SSMF 280 may proactively confirm whether the wireless access point 120 near the UE 100 has sufficient resources to support the local collaborative sensing data integration.

Through steps S1504 and S1505, the SSMF 280 may transmit the local integration confirmation message to the wireless access point 120. The local integration confirmation message is configured to inquire whether the wireless access point 120 supports the local collaborative sensing data integration. The wireless access point 120 may determine whether to support the local collaborative sensing data integration based on its own computing performance or communication performance. Through steps S1506 and S1507, the wireless access point 120 may return the local integration response message to the SSMF 280. The local integration response message is configured to indicate whether the wireless access point 120 supports the local collaborative sensing data integration.

Therefore, the SSMF 280 may confirm whether the wireless access point 120 supports the local collaborative sensing data integration through the local integration response message. If the wireless access point 120 supports the local collaborative sensing data integration, in step S1508, the SSMF 280 transmits the local collaborative sensing data integration activation message. Through steps S1509 and S1510, the wireless access point 120 and the UE 110 may respectively receive the local collaborative sensing data integration activation message. On the contrary, if the wireless access point 120 may not support the local collaborative sensing data integration, the SSMF 280 may notify the UE 110 that the local collaborative sensing data integration may not be activated. Therefore, the wireless access point 120 may generate data fusion results based on sensing information of multiple sensing equipment after the local collaborative sensing data integration is activated.

The following takes smart transportation as an application scenario and 5G network as an example to illustrate.

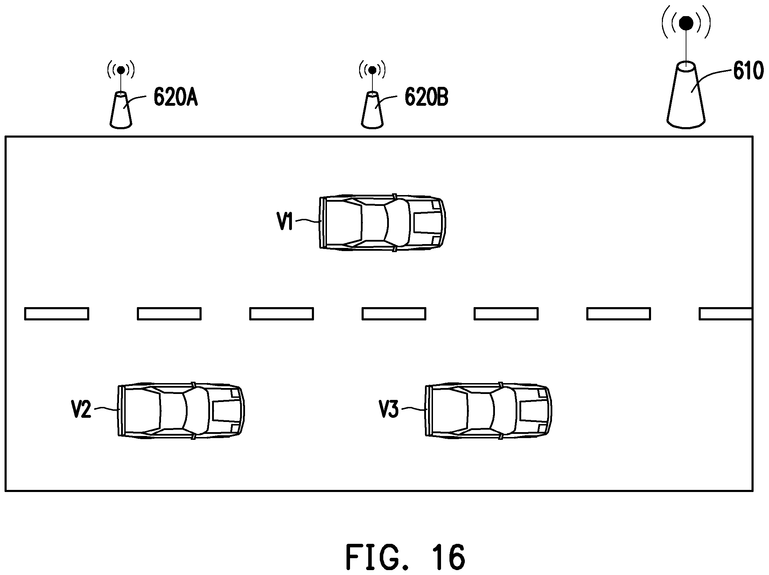

FIG. 16 is a schematic diagram of an application scenario according to an exemplary embodiment. Please refer to FIG. 16. In the embodiment, a base station 620A and a base station 620B are roadside units. The base station 620A and the base station 620B may have the service functions of the wireless access point 120, the AMF 260 and the SSMF 280. The base station 620A and the base station 620B may also serve as sensing equipment. On the other hand, a base station 610 may be a central management unit of a smart transportation system. The base station 610 may have the service functions of the AMF 260 and SSMF 280. The base station 610 has powerful computing power to allow the SSMF 280 of the base station 610 to serve a large-scale collaborative sensing network.

Please refer to FIG. 16. A car V1 enters the 5G network and requests the base station 610 to perform a collaborative sensing service registration. Afterwards, the base station 610 registers the car V1 and adds the car V1 to a collaborative sensing network. Furthermore, the base station 610 and the car V1 may execute the process shown in FIG. 4 to complete the collaborative sensing service registration. The car V1 may enter an operation mode that supports the periodic collaborative sensing service based on the first collaborative sensing configuration information configured by the base station 610, and activate the periodic collaborative sensing service.

Then, the car V1, cars V2 and V3, and the base stations 620A and 620B may participate in collaborative perception at the same time and provide their respective sensing information to the base station 610. The base station 610 may generate an integrated sensing report and transmit the integrated sensing report to the car V1, the cars V2 and V3, and the base stations 620A and 620B. The car V1, the cars V2 and V3, the base stations 620A and 620B, and the base station 610 may execute the process shown in FIG. 5 to implement the first-level periodic collaborative sensing service. The car V1 may adjust radar parameters based on the integrated sensing report provided by the base station 610. The periodic collaborative sensing service may be repeatedly executed at regular intervals.

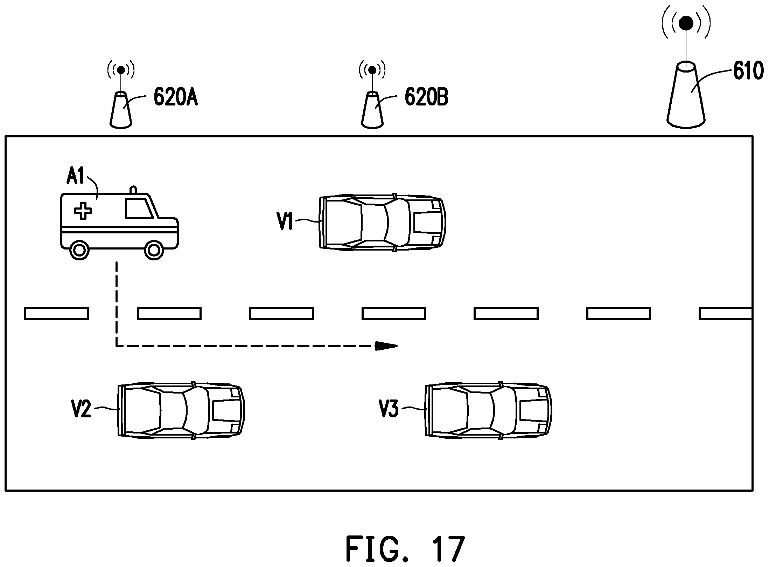

FIG. 17 is a schematic diagram of an application scenario according to an exemplary embodiment. Please refer to FIG. 17. For descriptions of the base station 620A, the base station 620B and the base station 610, please refer to the description of FIG. 16, and details will not be described again. Please refer to FIG. 17. An ambulance A1 enters the 5G network and requests the base station 610 to perform the collaborative sensing service registration. Afterwards, the base station 610 registers the ambulance A1 and allows the ambulance A1 to join the collaborative sensing network. Afterwards, the ambulance A1 may enter an operation mode that supports the periodic collaborative sensing service based on the first collaborative sensing configuration information configured by the base station 610, and activate the first-level periodic collaborative sensing service.

In an embodiment, when the ambulance A1 receives a mission notification of a rescue mission, the ambulance A1 may request the base station 610 to update the service configuration of the collaborative sensing service. Therefore, through the process shown in FIG. 12, the ambulance A1 may request the base station 610 to activate the second-level periodic collaborative sensing service. The base station 610 may assign the cars V2 and V3 as collaborators of the collaborative sensing service. In an embodiment, through the second-level periodic collaborative sensing service process shown in FIG. 6, the cars V2 and V3 are notified to provide lane sensing information needed by the ambulance A1, and provide the lane sensing information to the ambulance A1. The ambulance A1 may plan navigation routes based on the lane sensing information provided by the cars V2 and V3. Afterwards, the ambulance A1 may upload sensing information to the base station 610. The base station 610 may decide whether to reassign new collaborators. If the base station 610 decides to reassign the new collaborator, through the process shown in FIG. 8, the base station 610 may transmit the mode switching response or the service configuration update response to the ambulance A1 to allow the ambulance A1 to update the collaborator. The second-level periodic collaborative sensing service may be repeatedly executed at regular intervals until the rescue mission of the ambulance A1 ends.

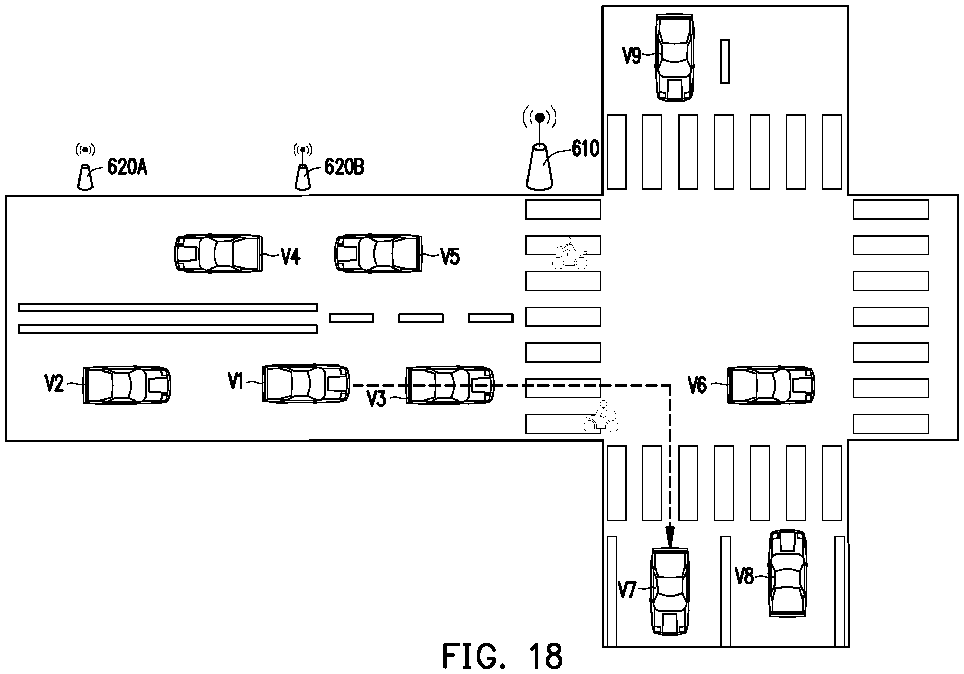

FIG. 18 is a schematic diagram of an application scenario according to an exemplary embodiment. Please refer to FIG. 18. For descriptions of the base station 620A, the base station 620B and the base station 610, please refer to the description of FIG. 16, and details will not be described again. Please refer to FIG. 18. The car V1 enters the 5G network and requests the base station 610 to perform the collaborative sensing service registration. Afterwards, the base station 610 registers the car V1 and allows the car V1 to join the collaborative sensing network. Afterwards, the car V1 may enter an operation mode that supports the periodic collaborative sensing service based on the first collaborative sensing configuration information configured by the base station 610, and activate the first-level periodic collaborative sensing service.

In an embodiment, when the car V1 has a need for turning at an intersection, the car V1 may request the base station 610 to update the service configuration of the collaborative sensing service. Therefore, through the process shown in FIG. 12, the car V1 may request to activate an aperiodic collaborative sensing service. Afterwards, the base station 610 may assign the car V3, and cars V6 and V7 as collaborators of the aperiodic collaborative sensing service. In an embodiment, through the process shown in FIG. 8, the car V1 may obtain collaborator information, and the cars V3, V6 and V7 may provide sensing information needed for turning to the car V1. The car V1 may plan navigation routes based on the sensing information provided by the cars V3, V6 and V7. After the car V1 turns, the car V1 may notify the cars V3, V6 and V7 and the base station 610 to suspend the aperiodic collaborative sensing service.

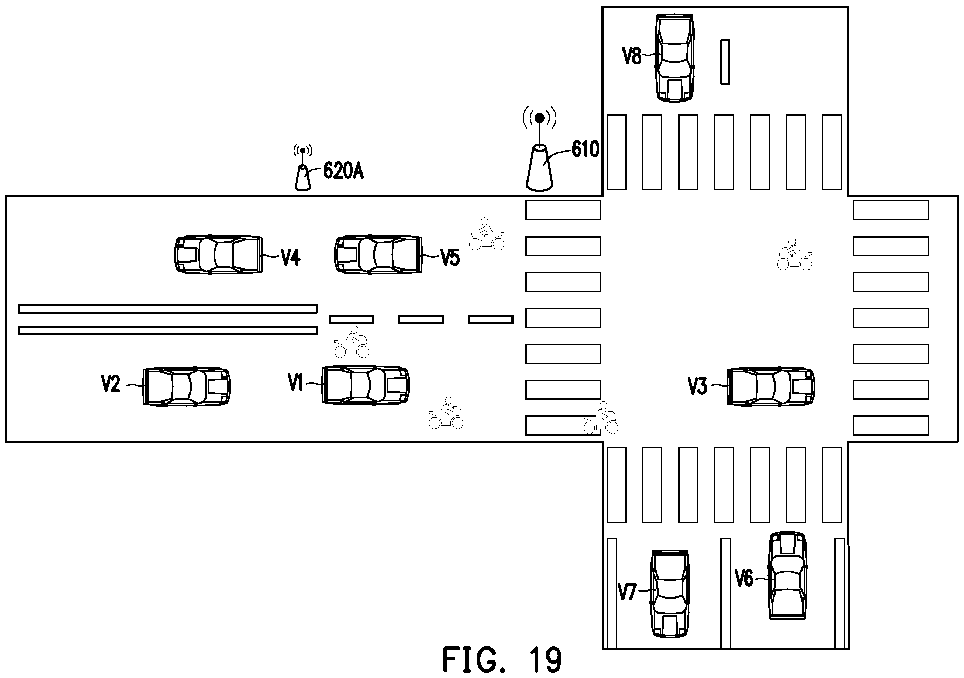

FIG. 19 is a schematic diagram of an application scenario according to an exemplary embodiment. Please refer to FIG. 19. For descriptions of the base station 620A and the base station 610, please refer to the description of FIG. 16, and details will not be described again. Please refer to FIG. 19. The car V1 enters the 5G network and requests the base station 610 to perform a collaborative sensing service registration. Afterwards, the base station 610 registers the car V1 and allows the car V1 to join the collaborative sensing network. Afterwards, the car V1 may enter an operation mode that supports the periodic collaborative sensing service based on the first collaborative sensing configuration information configured by the base station 610, and activate the first-level periodic collaborative sensing service.

In an embodiment, when the car V1 discovers traffic chaos and the sensing field of view of the car V1 is blocked, the car V1 may request the base station 610 to update the service configuration of the collaborative sensing service. Therefore, through the process shown in FIG. 12, the car V1 may request to activate an aperiodic collaborative sensing service. Afterwards, the base station 610 may assign the base stations 620A and the car V2 as temporary collaborators of the aperiodic collaborative sensing service. Through the process shown in FIG. 8, the car V1 may obtain collaborator information, and the car V2 and the base station 620A may provide sensing information to the car V1. The car V1 may plan navigation routes based on the sensing information provided by the car V2 and the base station 620A. After the sensing field of view of the car V1 is not blocked, the car V1 may notify the car V2 and the base station 620A to suspend the aperiodic collaborative sensing service. The base station 610 may reconfigure the car V1 to adopt the first-level periodic collaborative sensing service.

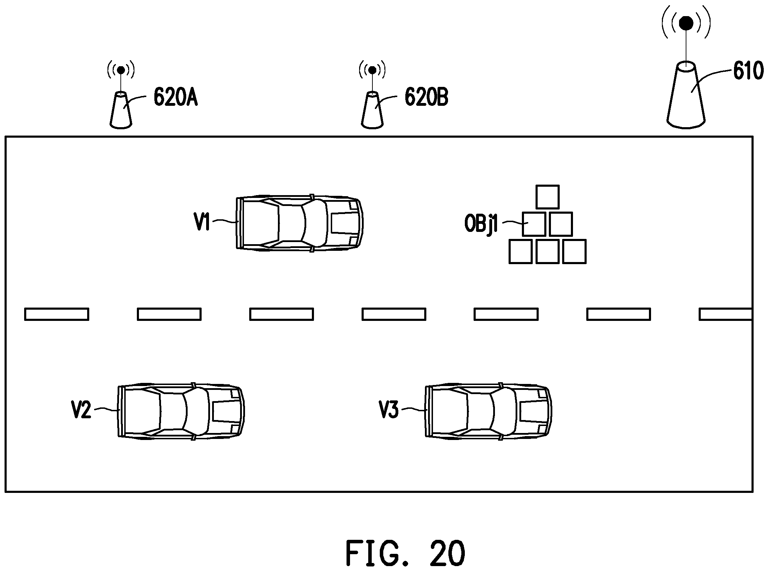

FIG. 20 is a schematic diagram of an application scenario according to an exemplary embodiment. Please refer to FIG. 20. For descriptions of the base station 620A, the base station 620B and the base station 610, please refer to the description of FIG. 16, and details will not be described again. Please refer to FIG. 20. The car V1 enters the 5G network and requests the base station 610 to perform the collaborative sensing service registration. Afterwards, the base station 610 registers the car V1 and allows the car V1 to join the collaborative sensing network. Afterwards, the car V1 may enter an operation mode that supports the periodic collaborative sensing service based on the first collaborative sensing configuration information configured by the base station 610, and activate the first-level periodic collaborative sensing service.

When the base station 620B detects the presence of an external object Obj1, the base station 620B may send an emergency broadcast to notify nearby vehicles of the presence of the external object Obj1 in the lane. The car V1 may receive the emergency broadcast sent by the base station 620B. The car V1 may establish communication with the base station 620B to receive sensing information of the base station 620B. When the external object Obj 1 is removed, the base station 620B may transmit an emergency broadcast end notification. That is, the base station 620B serving as the sensing equipment may initiate an emergency broadcast and provide its own sensing information to other surrounding sensing equipment. That is to say, by replacing the UE 110b in FIG. 10 with the base station 620B, the emergency broadcast service in the collaborative sensing service may also be implemented.

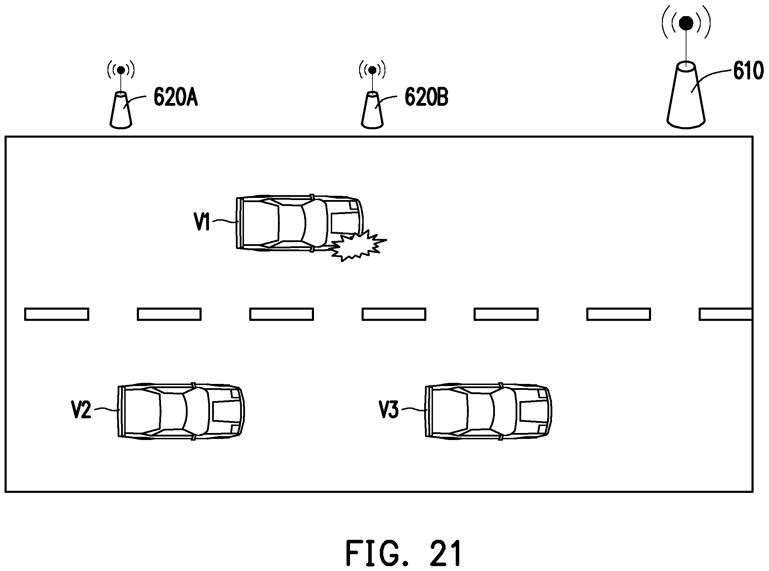

FIG. 21 is a schematic diagram of an application scenario according to an exemplary embodiment. Please refer to FIG. 21. For descriptions of the base station 620A, the base station 620B and the base station 610, please refer to the description of FIG. 16, and details will not be described again. Please refer to FIG. 21. The car V1 enters the 5G network and requests the base station 610 to perform the collaborative sensing service registration. Afterwards, the base station 610 registers the car V1 and allows the car V1 to join the collaborative sensing network. Afterwards, the car V1 may enter an operation mode that supports the periodic collaborative sensing service based on the first collaborative sensing configuration information configured by the base station 610, and activate the first-level periodic collaborative sensing service.

When the car V1 detects a radar failure, the car V1 may activate an emergency broadcast as shown in the process in FIG. 10 to transmit the emergency broadcast to the car V3. When the emergency broadcast is suspended, but the radar failure is not eliminated, the car V1 may request to activate an emergency collaborative sensing service. In other words, the car V1 may request to enter an emergency mode. Afterwards, through the process shown in FIG. 11, the base station 610 may assign the car V2 as the collaborator. The car V1 may obtain collaborator information, and the car V2 may provide sensing information to the car V1. Therefore, when the radar of the car V1 fails, the car V1 may use the sensing information provided by the car V2 to assist driving. The base station 610 may determine whether to release the emergency mode of the car V1 at regular intervals and broadcast relevant information at regular intervals.

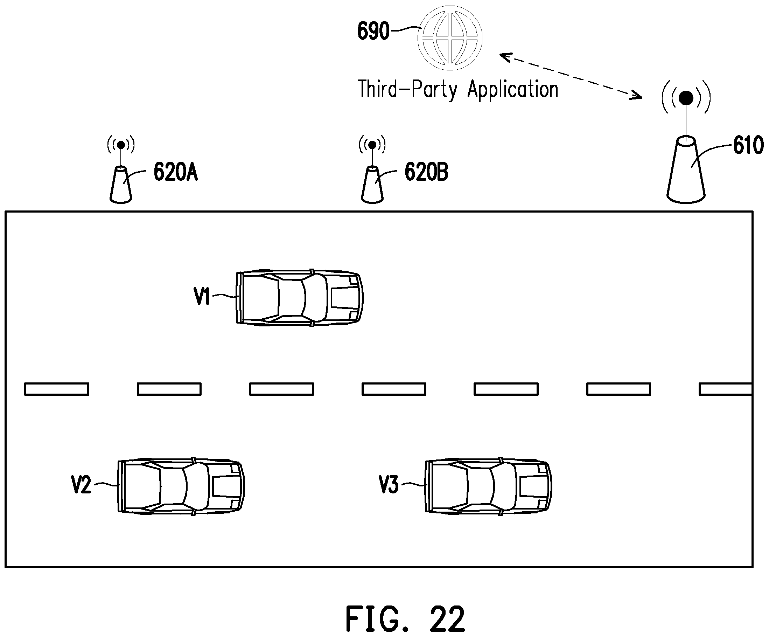

FIG. 22 is a schematic diagram of an application scenario according to an exemplary embodiment. Please refer to FIG. 22. For descriptions of the base station 620A, the base station 620B and the base station 610, please refer to the description of FIG. 16, and details will not be described again. Please refer to FIG. 22. The car V1 enters the 5G network and requests the base station 610 to perform the collaborative sensing service registration. Afterwards, the base station 610 registers the car V1 and allows the car V1 to join the collaborative sensing network. Afterwards, the car V1 may enter an operation mode that supports the periodic collaborative sensing service based on the first collaborative sensing configuration information configured by the base station 610, and activate the first-level periodic collaborative sensing service.

Next, the car V1, the cars V2 and V3, and the base stations 620A and 620B may participate in collaborative sensing at the same time and provide their respective sensing information to the base station 610. The base station 610 may generate an integrated sensing report. In an embodiment, the car V1, the cars V2 and V3, the base stations 620A and 620B, and the base station 610 may execute the process shown in FIG. 5 to implement the first-level periodic collaborative sensing service. Afterwards, the third-party application 690 (such as a map server) may request the base station 610 to obtain an integrated sensing report through the core network. Alternately, in other embodiments, the navigation system of the car V1 requests the base station 610 to obtain the integrated sensing report through wireless access technology. The base station 610 may grant access authority to the integrated sensing report. In an embodiment, through the processes shown in FIG. 13 and FIG. 14, the third-party application 690 may obtain the integrated sensing report provided by the base station 610. The third-party application 690 may generate real-time map information based on the real-time integrated sensing report provided by the base station 610, and transmit to the navigation system of the car V1 and vehicles in need by the base station 610 through the 5G network.

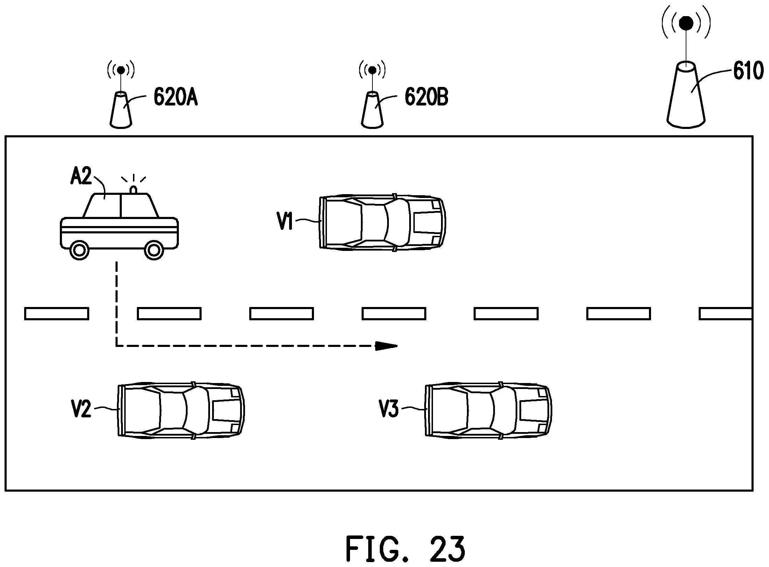

FIG. 23 is a schematic diagram of an application scenario according to an exemplary embodiment. Please refer to FIG. 23. For descriptions of the base station 620A, the base station 620B and the base station 610, please refer to the description of FIG. 16, and details will not be described again. Please refer to FIG. 23. A police car A2 enters the 5G network and requests the base station 610 to perform the collaborative sensing service registration. Afterwards, the base station 610 registers the police car A2 and allows the police car A2 to join the collaborative sensing network. Afterwards, the police car A2 may enter an operation mode that supports the periodic collaborative sensing service based on the first collaborative sensing configuration information configured by the base station 610, and activate the first-level periodic collaborative sensing service.

In an embodiment, when the police car A2 receives a mission notification to perform a mission, the police car A2 may request the base station 610 to update the service configuration of the collaborative sensing service. Therefore, through the process shown in FIG. 12, the police car A2 may request the base station 610 to activate the second-level periodic collaborative sensing service. The base station 610 may assign the cars V2 and V3 as collaborators of the collaborative sensing service. Afterwards, through the process shown in FIG. 7, the cars V2 and V3 may be awakened and switched from an idle mode to an operation mode that supports the periodic collaborative sensing service. The cars V2 and V3 may be notified to perform the bistatic collaborative perception with the police car A2 to generate sensing information. The police car A2 may plan driving routes based on the foregoing sensing information. Afterwards, the police car A2 may upload the sensing information to the base station 610. The base station 610 may decide whether to reassign new collaborators.

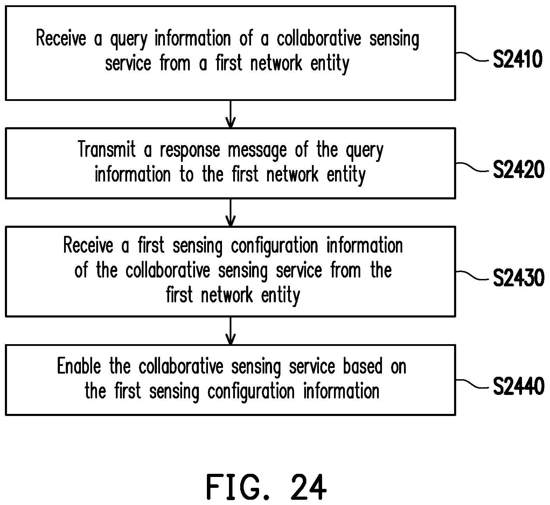

FIG. 24 is a flow chart of a processing method using integrated sensing and communication technology according to an embodiment. Referring to FIG. 24, the processing method of the embodiment is adapted to a user equipment. In step S2410, the UE receives the query information of the collaborative sensing service from the first network entity. In step S2420, the UE transmits the response message of the query information to the first network entity. In step S2430, the UE receives the first sensing configuration information of the collaborative sensing service from the first network entity. In step S2440, the UE enables the collaborative sensing service based on the first sensing configuration information. However, each step in FIG. 24 has been described in detail above and will not be described again here.

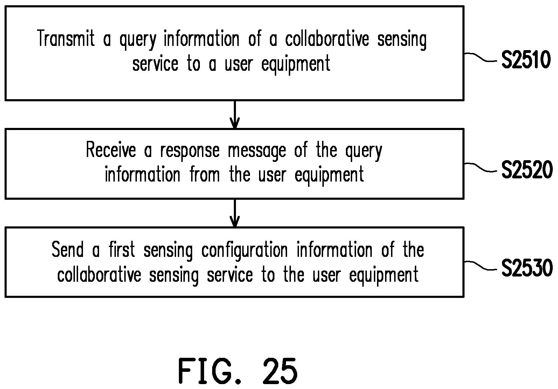

FIG. 25 is a flow chart of a processing method using integrated sensing and communication technology according to an embodiment. Referring to FIG. 25, the processing method of the embodiment is adapted to the first network entity. In step S2510, the first network entity transmits the query information of the collaborative sensing service to a user equipment. In step S2520, the first network entity receives the response message of the query information from the user equipment. In step S2530, the first network entity transmits the first sensing configuration information of the collaborative sensing service to the UE. However, each step in FIG. 25 has been described in detail above and will not be described again here.

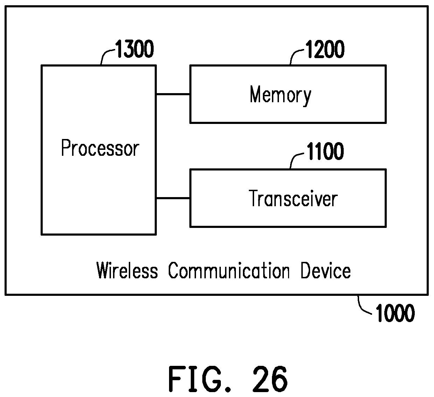

FIG. 26 is a block diagram of a wireless communication device according to an embodiment. Referring to FIG. 26, a wireless communication device 1000 may include at least, but not limited to, a processor 1300, a memory 1200 and a transceiver 1300. The wireless communication device 1000 may be implemented as a network entity, a user equipment and a wireless access point in the disclosure.

The processor 1300 is, for example, a central processing unit (CPU), other programmable general or special microprocessors, a digital signal processor (DSP), a programmable controller, an application specific integrated circuit (ASIC), a graphics processing unit (GPU), other similar components, or any combination of the foregoing components. The processor 1300 is configured to execute the processing method using integrated sensing and communication technology as described above.

The memory 1200 is coupled to the processor 1300 and is, for example, any type of fixed or mobile volatile memory or non-volatile memory, such as random access memory (RAM), read-only memory (ROM), flash memory, hard disk (HDD), solid state drive (SSD), other similar components, or any combination of the foregoing components. The memory 1200 stores multiple modules or programs to be accessed by the processor 1300 to allow the processor 1300 to execute various communication functions between network entities, user equipment and wireless access points.

The transceiver 1100 is coupled to the processor 1300. The transceiver 1300 may receive a downlink (DL) signal and transmit an uplink (UL) signal. The transceiver 1100 may execute, for example, low noise amplification (LNA), impedance matching, analog-to-digital conversion (ADC), digital-to-analog conversion (DAC), frequency mixing, up and down frequency conversion, filtering, amplification and/or similar operations. The transceiver 1100 may further include an antenna array, and the antenna array may include one or more antennas configured to transmit and receive omnidirectional antenna beams or directional antenna beams.

In summary, in the embodiment, a dedicated network function is designed for sensing functions of the communication system, and various service processes are proposed for collaborative sensing service design. Based on this, wireless sensing technology may be more effectively applied to various scenarios and provide more possibilities for related designs.

## Claims

1. A processing method using integrated sensing and communication technology, adapted to a user equipment (110, 110a, 110b), **characterized by** comprising:
receiving (S2410) a query information of a collaborative sensing service from a first network entity;
transmitting (S2420) a response message of the query information to the first network entity;
receiving (S2430) a first collaborative sensing configuration information of the collaborative sensing service from the first network entity; and
enabling (S2440) the collaborative sensing service based on the first collaborative sensing configuration information.

2. The processing method according to claim 1, wherein the first collaborative sensing configuration information is configured to indicate a service mode of the collaborative sensing service or a sensing mode of the collaborative sensing service, the service mode of the collaborative sensing service comprises a periodic collaborative sensing service, an aperiodic collaborative sensing service, an emergency broadcast service, or an emergency collaborative sensing service, and the sensing mode comprises a monostatic sensing and a bistatic sensing.

3. The processing method according to claim 2, wherein a radio resource of a sensing signal in the sensing mode is configured by a base station.

4. The processing method according to claim 1, further comprising:
transmitting a network registration request, wherein the network registration request comprises capability indication information, and the capability indication information is configured to indicate that the user equipment (110, 110a, 110b) has a capability to use the collaborative sensing service.

5. The processing method according to claim 1, wherein the response message is configured to indicate whether the user equipment (110, 110a, 110b) participates in the collaborative sensing service, an operation mode supported by the user equipment (110, 110a, 110b), an authority flag of an authority level or a sensing capability parameter of the user equipment (110, 110a, 110b), wherein the authority flag comprises a payment flag, an authorization flag or a service flag, and the sensing capability parameter comprises a maximum detectable distance, a maximum detectable speed, a distance resolution, a speed resolution, a visual range, an angle resolution, a maximum power, an antenna array parameter, a radar algorithm used, a frequency band used, a bandwidth used or a memory size.

6. The processing method according to claim 1, further comprising:
transmitting a first sensing information to the first network entity;
receiving an integrated sensing report associated with the first sensing information from the first network entity; and
executing an operation based on the integrated sensing report.

7. The processing method according to claim 6, wherein the first sensing information comprises local sensing data of the user equipment (110, 110a, 110b) or local behavior data of the user equipment (110, 110a, 110b).

8. The processing method according to claim 6, further comprising:
switching to an operation mode that supports a periodic collaborative sensing service or an aperiodic collaborative sensing service to activate the periodic collaborative sensing service or the aperiodic collaborative sensing service in the operation mode.

9. The processing method according to claim 6, further comprising:
receiving a second collaborative sensing configuration information from the first network entity, wherein the second collaborative sensing configuration information comprises an equipment identification information of a sensing equipment;
receiving a second sensing information transmitted by the sensing equipment; and
executing a sensing data integration based on the second sensing information and a third sensing information sensed by the user equipment (110, 110a, 110b) to generate the first sensing information.

10. The processing method according to claim 9, wherein the user equipment (110, 110a, 110b) executes a monostatic sensing to obtain the third sensing information.

11. The processing method according to claim 9, wherein steps of receiving the second collaborative sensing configuration information from the first network entity comprise:
transmitting a service request of an aperiodic collaborative sensing service to the first network entity; and
receiving the second collaborative sensing configuration information of the aperiodic collaborative sensing service.

12. The processing method according to claim 11, further comprising:
transmitting a service suspension message of the aperiodic collaborative sensing service to the sensing equipment and the first network entity.

13. The processing method according to claim 6, further comprising:
receiving a second collaborative sensing configuration information from the first network entity, wherein the second collaborative sensing configuration information comprises an equipment identification information of a sensing equipment; and
executing a bistatic sensing with the sensing equipment to generate the first sensing information, wherein one of the sensing equipment and the user equipment (110, 110a, 110b) is a sensing signal transmitter of the bistatic sensing, and another one of the sensing equipment and the user equipment (110, 110a, 110b) is a sensing signal receiver of the bistatic sensing.

14. The processing method according to claim 6, further comprising:
switching to an operation mode that supports a periodic collaborative sensing service or an aperiodic collaborative sensing service, wherein a second collaborative sensing configuration information comprises an equipment identification information of a sensing equipment and a collaborator indication, in response to receiving the second collaborative sensing configuration information from the first network entity; and
transmitting the first sensing information to the sensing equipment.

15. The processing method according to claim 1, wherein steps of receiving the query information of the collaborative sensing service from the first network entity comprise:
transmitting the network registration request to a second network entity; and
receiving the query information of the collaborative sensing service from the first network entity through the second network entity, wherein the query information is configured to inquire whether the user equipment (110, 110a, 1 10b) participates in the collaborative sensing service.

16. The processing method according to claim 1, further comprising:
broadcasting an emergency broadcast message of the collaborative sensing service to allow a sensing equipment and the first network entity to receive the emergency broadcast message;
establishing communication with the sensing equipment in response to receiving an emergency broadcast response returned by the sensing equipment; and
receiving a sensing information generated by the sensing equipment in response to the emergency broadcast.

17. The processing method according to claim 16, further comprising:
transmitting an emergency broadcast end notification to the sensing equipment and the first network entity.

18. The processing method according to claim 1, further comprising:
receiving a second collaborative sensing configuration information from the first network entity, wherein the second collaborative sensing configuration information comprises an equipment identification information of a sensing equipment, in response to activating an emergency collaborative sensing service;
receiving a sensing information transmitted by the sensing equipment; and
executing a sensing data integration based on the sensing information transmitted by the sensing equipment.

19. The processing method according claim 18, further comprising:
stopping an activation of the emergency collaborative sensing service in response to receiving an emergency mode unreleased notification.

20. The processing method according to claim 1, further comprising:
receiving a mode switching response or a service configuration update response in response to transmitting a mode switching request or a service configuration update request of the collaborative sensing service to the first network entity; and
switching an operation mode or updating a service configuration in response to receiving the mode switching response or the service configuration update response.

21. The processing method according to claim 1, further comprising:
transmitting a local collaborative sensing data integration request to the first network entity; and
receiving a local collaborative sensing data integration activation message from the first network entity in response to a wireless access point supporting a local collaborative sensing data integration.

22. A user equipment (110, 110a, 110b), **characterized by** comprising:
a transceiver (1100), configured to receive and transmit a signal; and
a processor (1300), coupled to the transceiver and configured to:
receive (S2410) a query information of a collaborative sensing service from a first network entity;
transmit (S2420) a response message of the query information to the first network entity;
receive (S2430) a first collaborative sensing configuration information of the collaborative sensing service from the first network entity; and
enable (S2440) the collaborative sensing service based on the first collaborative sensing configuration information.

23. A processing method using integrated sensing and communication technology, adapted to a first network entity, **characterized by** comprising:
transmitting (S2510) a query information of a collaborative sensing service to a user equipment;
receiving (S2520) a response message of the query information from the user equipment; and
transmitting (S2530) a first collaborative sensing configuration information of the collaborative sensing service to the user equipment.

24. The processing method according to claim 23, wherein the transmitting step of the query information of the collaborative sensing service comprises:
receiving a registration report associated with the user equipment from a second network entity; and
transmitting the query information to the user equipment.

25. The processing method according to claim 23, further comprising:
transmitting a second collaborative sensing configuration information of the collaborative sensing service to the user equipment, wherein the second collaborative sensing configuration information comprises an equipment identification information of a sensing equipment.

26. The processing method according to claim 23, further comprising:
receiving a sensing information transmitted by the user equipment;
generating an integrated sensing report based on the sensing information of the user equipment; and
transmitting the integrated sensing report to the user equipment.

27. The processing method according to claim 26, further comprising:
receiving a sensing report access request of a third-party application through a second network entity; and
transmitting an access authority message and the integrated sensing report to the third-party application in response to the sensing report access request.

28. The processing method according to claim 23, further comprising:
receiving a mode switching request or a service configuration update request of the collaborative sensing service, and rescheduling an operation mode or a service configuration of the user equipment; and
transmitting a mode switching response or a service configuration update response.

29. The processing method according to claim 23, further comprising:
receiving a local collaborative sensing data integration request from the user equipment; and
transmitting a local collaborative sensing data integration activation message to a wireless access point and the user equipment in response to the wireless access point supporting a local collaborative sensing data integration.

## Amended claims

### Amended claims in accordance with Rule 137(2) EPC.

1. A processing method using integrated sensing and communication technology, adapted to a user equipment (110, 110a, 110b), **characterized by** comprising:
receiving (S2410) a query information of a collaborative sensing service from a first network entity;
transmitting (S2420) a response message of the query information to the first network entity;
in response to transmitting the response message, receiving (S2430) a first collaborative sensing configuration information of the collaborative sensing service from the first network entity; and
enabling (S2440) the collaborative sensing service based on the first collaborative sensing configuration information.

2. The processing method according to claim 1, wherein the first collaborative sensing configuration information is configured to indicate a service mode of the collaborative sensing service or a sensing mode of the collaborative sensing service, the service mode of the collaborative sensing service comprises a periodic collaborative sensing service, an aperiodic collaborative sensing service, an emergency broadcast service, or an emergency collaborative sensing service, and the sensing mode comprises a monostatic sensing and a bistatic sensing.

3. The processing method according to claim 2, wherein a radio resource of a sensing signal in the sensing mode is configured by a base station.

4. The processing method according to claim 1, further comprising:
transmitting a network registration request, wherein the network registration request comprises capability indication information, and the capability indication information is configured to indicate that the user equipment (110, 110a, 110b) has a capability to use the collaborative sensing service.

5. The processing method according to claim 1, wherein the response message is configured to indicate whether the user equipment (110, 110a, 110b) participates in the collaborative sensing service, an operation mode supported by the user equipment (110, 110a, 110b), an authority flag of an authority level or a sensing capability parameter of the user equipment (110, 110a, 110b), wherein the authority flag comprises a payment flag, an authorization flag or a service flag, and the sensing capability parameter comprises a maximum detectable distance, a maximum detectable speed, a distance resolution, a speed resolution, a visual range, an angle resolution, a maximum power, an antenna array parameter, a radar algorithm used, a frequency band used, a bandwidth used or a memory size.

6. The processing method according to claim 1, further comprising:
transmitting a first sensing information to the first network entity;
receiving an integrated sensing report associated with the first sensing information from the first network entity; and
executing an operation based on the integrated sensing report.

7. The processing method according to claim 6, wherein the first sensing information comprises local sensing data of the user equipment (110, 110a, 110b) or local behavior data of the user equipment (110, 110a, 110b).

8. The processing method according to claim 6, further comprising:
switching to an operation mode that supports a periodic collaborative sensing service or an aperiodic collaborative sensing service to activate the periodic collaborative sensing service or the aperiodic collaborative sensing service in the operation mode.

9. The processing method according to claim 6, further comprising:
receiving a second collaborative sensing configuration information from the first network entity, wherein the second collaborative sensing configuration information comprises an equipment identification information of a sensing equipment;
receiving a second sensing information transmitted by the sensing equipment; and
executing a sensing data integration based on the second sensing information and a third sensing information sensed by the user equipment (110, 110a, 110b) to generate the first sensing information.

10. The processing method according to claim 9, wherein the user equipment (110, 110a, 110b) executes a monostatic sensing to obtain the third sensing information.

11. The processing method according to claim 9, wherein steps of receiving the second collaborative sensing configuration information from the first network entity comprise:
transmitting a service request of an aperiodic collaborative sensing service to the first network entity; and
receiving the second collaborative sensing configuration information of the aperiodic collaborative sensing service.

12. The processing method according to claim 11, further comprising:
transmitting a service suspension message of the aperiodic collaborative sensing service to the sensing equipment and the first network entity.

13. The processing method according to claim 6, further comprising:
receiving a second collaborative sensing configuration information from the first network entity, wherein the second collaborative sensing configuration information comprises an equipment identification information of a sensing equipment; and
executing a bistatic sensing with the sensing equipment to generate the first sensing information, wherein one of the sensing equipment and the user equipment (110, 110a, 110b) is a sensing signal transmitter of the bistatic sensing, and another one of the sensing equipment and the user equipment (110, 110a, 110b) is a sensing signal receiver of the bistatic sensing.

14. The processing method according to claim 6, further comprising:
switching to an operation mode that supports a periodic collaborative sensing service or an aperiodic collaborative sensing service, wherein a second collaborative sensing configuration information comprises an equipment identification information of a sensing equipment and a collaborator indication, in response to receiving the second collaborative sensing configuration information from the first network entity; and
transmitting the first sensing information to the sensing equipment.

15. The processing method according to claim 1, wherein steps of receiving the query information of the collaborative sensing service from the first network entity comprise:
transmitting the network registration request to a second network entity; and
receiving the query information of the collaborative sensing service from the first network entity through the second network entity, wherein the query information is configured to inquire whether the user equipment (110, 110a, 110b) participates in the collaborative sensing service.

16. The processing method according to claim 1, further comprising:
broadcasting an emergency broadcast message of the collaborative sensing service to allow a sensing equipment and the first network entity to receive the emergency broadcast message;
establishing communication with the sensing equipment in response to receiving an emergency broadcast response returned by the sensing equipment; and
receiving a sensing information generated by the sensing equipment in response to the emergency broadcast.

17. The processing method according to claim 16, further comprising:
transmitting an emergency broadcast end notification to the sensing equipment and the first network entity.

18. The processing method according to claim 1, further comprising:
receiving a second collaborative sensing configuration information from the first network entity, wherein the second collaborative sensing configuration information comprises an equipment identification information of a sensing equipment, in response to activating an emergency collaborative sensing service;
receiving a sensing information transmitted by the sensing equipment; and
executing a sensing data integration based on the sensing information transmitted by the sensing equipment.

19. The processing method according claim 18, further comprising:
stopping an activation of the emergency collaborative sensing service in response to receiving an emergency mode unreleased notification.

20. The processing method according to claim 1, further comprising:
receiving a mode switching response or a service configuration update response in response to transmitting a mode switching request or a service configuration update request of the collaborative sensing service to the first network entity; and
switching an operation mode or updating a service configuration in response to receiving the mode switching response or the service configuration update response.

21. The processing method according to claim 1, further comprising:
transmitting a local collaborative sensing data integration request to the first network entity; and
receiving a local collaborative sensing data integration activation message from the first network entity in response to a wireless access point supporting a local collaborative sensing data integration.

22. A user equipment (110, 110a, 110b), **characterized by** comprising:
a transceiver (1100), configured to receive and transmit a signal; and
a processor (1300), coupled to the transceiver and configured to:
receive (S2410) a query information of a collaborative sensing service from a first network entity;
transmit (S2420) a response message of the query information to the first network entity;
in response to transmitting the response message, receive (S2430) a first collaborative sensing configuration information of the collaborative sensing service from the first network entity; and
enable (S2440) the collaborative sensing service based on the first collaborative sensing configuration information.

23. A processing method using integrated sensing and communication technology, adapted to a first network entity, **characterized by** comprising:
transmitting (S2510) a query information of a collaborative sensing service to a user equipment;
receiving (S2520) a response message of the query information from the user equipment; and
in response to receiving the response message, transmitting (S2530) a first collaborative sensing configuration information of the collaborative sensing service to the user equipment.

24. The processing method according to claim 23, wherein the transmitting step of the query information of the collaborative sensing service comprises:
receiving a registration report associated with the user equipment from a second network entity; and
transmitting the query information to the user equipment.

25. The processing method according to claim 23, further comprising:
transmitting a second collaborative sensing configuration information of the collaborative sensing service to the user equipment, wherein the second collaborative sensing configuration information comprises an equipment identification information of a sensing equipment.

26. The processing method according to claim 23, further comprising:
receiving a sensing information transmitted by the user equipment;
generating an integrated sensing report based on the sensing information of the user equipment; and
transmitting the integrated sensing report to the user equipment.

27. The processing method according to claim 26, further comprising:
receiving a sensing report access request of a third-party application through a second network entity; and
transmitting an access authority message and the integrated sensing report to the third-party application in response to the sensing report access request.

28. The processing method according to claim 23, further comprising:
receiving a mode switching request or a service configuration update request of the collaborative sensing service, and rescheduling an operation mode or a service configuration of the user equipment; and
transmitting a mode switching response or a service configuration update response.

29. The processing method according to claim 23, further comprising:
receiving a local collaborative sensing data integration request from the user equipment; and
transmitting a local collaborative sensing data integration activation message to a wireless access point and the user equipment in response to the wireless access point supporting a local collaborative sensing data integration.
